# EUROPEAN PATENT APPLICATION

(11) **EP 4 580 202 A1**
(43) Date of publication of application: **02.07.2025**
(21) Application number: 23857095.6
(22) Date of filing: 26.07.2023
(51) Int. Cl.: H04N 23/60, H04N 1/393

(54) **IMAGE FILE CREATION METHOD AND IMAGE FILE CREATION DEVICE**

(30) Priority: 24.08.2022 JP 2022133162
(71) Applicant: FUJIFILM Corporation, Tokyo 106-8620 (JP)
(72) Inventor: YAMAJI, Kei, Saitama-shi, Saitama 331-9624 (JP); KOBAYASHI, Toshiki, Saitama-shi, Saitama 331-9624 (JP); KOBAYASHI, Masaru, Saitama-shi, Saitama 331-9624 (JP); NISHIO, Yuya, Saitama-shi, Saitama 331-9624 (JP)
(74) Representative: Dehns Germany Partnerschaft mbB
(86) International application number: PCT/JP2023/027393
(87) International publication number: WO 2024/042979

(57) **Abstract**

Provided are an image file creation method and an image file generation device for more effectively using an accessory image as accessory information of a main image.

The present invention relates to an image file creation method of creating an image file including a main image and an accessory image as accessory information related to the main image, the image file creation method including: a type reception step of receiving a type of the accessory image in association with correction processing on the main image; and an acquisition step of acquiring the accessory image that is not changed in conjunction with a change in the main image caused by the correction processing, based on the type.

## Description

### BACKGROUND OF THE INVENTION

### 1. Field of the Invention

One embodiment of the present invention relates to an image file creation method and an image file creation device.

### 2. Description of the Related Art

In some cases, an accessory image such as a thumbnail image as accessory information related to a main image is stored in an image file along with the main image (for example, see JP2009-20266A). The accessory image is used, for example, in a case in which a content of the main image is simply checked, such as with the thumbnail image.

### SUMMARY OF THE INVENTION

It is required to increase a utility value of the accessory image. For example, in a case in which correction is executed on the main image which is an original image of the accessory image, the accessory image can be more effectively used as long as the correction execution can be understood from the accessory image.

One embodiment of the present invention is to solve the above-described problem of the related art, and an object of the present invention is to provide an image file creation method and an image file creation device for more effectively using an accessory image as accessory information of a main image.

In order to achieve the above-described object, an aspect of the present invention relates to an image file creation method of creating an image file including a main image and an accessory image as accessory information related to the main image, the image file creation method comprising: a type reception step of receiving a type of the accessory image in association with correction processing on the main image; and an acquisition step of acquiring the accessory image that is not changed in conjunction with a change in the main image caused by the correction processing, based on the type.

In addition, the acquisition step may be carried out in a case in which the correction processing is executed on the main image.

In addition, the correction processing may be executed in an imaging device that captures the main image.

In addition, in the type reception step, at least one of a first accessory image, a second accessory image, or a third accessory image may be received as the type. In this case, the first accessory image may be generated based on a first image obtained by executing development correction processing for development on a RAW image as the main image. The second accessory image may be generated based on a second image obtained by executing color correction processing including color correction on the main image. The third accessory image may be generated based on a third image obtained by executing process correction processing for processing a subject in the main image on the main image.

In addition, the development correction processing may not include a portion of a plurality of pieces of the color correction that are executable in the color correction processing.

In addition, in a case in which two or more types of the accessory images among the first accessory image, the second accessory image, and the third accessory image are acquired, the image file may include the two or more types of the accessory images as the accessory images.

In addition, in a case in which the third image is acquired by executing the process correction processing on the first image or the second image as the main image included in the image file, the main image included in the image file may be replaced with the third image from the first image or the second image.

In addition, the image file creation method according to the aspect of the present invention may further comprise a selection acquisition step of acquiring selection of a user regarding whether or not to acquire the third accessory image in a case in which the process correction processing is executed on the main image. The acquisition step of acquiring the third accessory image may be carried out in accordance with the selection in a case in which the process correction processing is executed on the main image.

In addition, the image file creation method according to the aspect of the present invention may further comprise a decision step of deciding whether or not to carry out the acquisition step of acquiring the third accessory image based on a correction content of the main image in a case in which the process correction processing is executed on the main image.

In addition, the accessory information may include information related to the type of the accessory image.

In addition, the accessory information may include information obtained by encrypting the accessory image. In this case, the information obtained by encrypting the accessory image may include a hash value obtained by hashing the accessory image.

In addition, the accessory image may include a first thumbnail image that is not changed in conjunction with the change in the main image caused by the correction processing and that is generated by reducing an entirety or a part of the main image at a point in time of generation of the accessory image.

In addition, the accessory image may include a second thumbnail image that is changed in conjunction with the change in the main image caused by the correction processing and that is generated by reducing the entirety or a part of the main image.

Another aspect of the present invention relates to an image file creation device that creates an image file including a main image and an accessory image as accessory information related to the main image, the image file creation device comprising: a processor, in which the processor receives a type of the accessory image in association with correction processing on the main image, and the processor acquires the accessory image that is not changed in conjunction with a change in the main image caused by the correction processing, based on the type.

### BRIEF DESCRIPTION OF THE DRAWINGS

Fig. 1 is a diagram showing an example of an image data structure.
Fig. 2 is an explanatory diagram of an image file.
Fig. 3A is an explanatory diagram of development correction processing.
Fig. 3B is an explanatory diagram of color correction processing.
Fig. 3C is an explanatory diagram of process correction processing.
Fig. 4 is a diagram showing a configuration example of an image file creation device according to one embodiment of the present invention.
Fig. 5 is a diagram showing an example of a screen for receiving a type of an accessory image.
Fig. 6 is a diagram showing functions of an image file creation device according to a first embodiment of the present invention.
Fig. 7 is a diagram showing an example of a screen for selecting whether or not to acquire a third accessory image.
Fig. 8 is a diagram showing a first example of a generation pattern of the accessory image.
Fig. 9 is a diagram showing a second example of the generation pattern of the accessory image.
Fig. 10 is a diagram showing a third example of the generation pattern of the accessory image.
Fig. 11 is an explanatory diagram of a first thumbnail image.
Fig. 12A is a diagram showing an image file creation flow according to the first embodiment of the present invention (part 1).
Fig. 12B is a diagram showing the image file creation flow according to the first embodiment of the present invention (part 2).
Fig. 13A is an explanatory diagram of combining processing in a first mode.
Fig. 13B is an explanatory diagram of combining processing in a second mode.
Fig. 13C is an explanatory diagram of combining processing in a third mode.
Fig. 13D is an explanatory diagram of combining processing in a fourth mode.
Fig. 14 is a diagram showing functions of an image file creation device according to a second embodiment.
Fig. 15 is a diagram showing an example of a screen for receiving designation of an image generation mode.
Fig. 16 is a diagram showing an example of a screen for receiving designation of a base image used for the generation of the accessory image.
Fig. 17 is an explanatory diagram of a thumbnail image generated in a case in which the image generation mode is the first mode.
Fig. 18 is an explanatory diagram of a thumbnail image generated in a case in which the image generation mode is the second mode.
Fig. 19 is an explanatory diagram of a thumbnail image generated in a case in which the image generation mode is the third mode.
Fig. 20 is an explanatory diagram of a thumbnail image generated in a case in which the image generation mode is the fourth mode.
Fig. 21 is a diagram showing an image file creation flow according to the second embodiment.
Fig. 22 is an explanatory diagram of effectiveness of an image file creation method according to a third embodiment.
Fig. 23 is a diagram showing an accessory image generated in the third embodiment.
Fig. 24 is a diagram showing functions of an image file creation device according to the third embodiment.
Fig. 25 is a diagram showing an example of a screen for designating a type of a main subject.
Fig. 26 is a diagram showing an example of a screen for receiving selection of a mode for increasing a resolution or the number of gradations of the accessory image.
Fig. 27 is a diagram showing an image file creation flow according to the third embodiment.
Fig. 28 is a diagram showing functions of an image file creation device according to a fourth embodiment.
Fig. 29 is a diagram showing an accessory image generated in the fourth embodiment.
Fig. 30 is a diagram showing an example of a screen for receiving a setting of increasing a resolution of the accessory image.
Fig. 31 is a diagram showing a manner of generating the accessory image in the fourth embodiment.
Fig. 32 is a diagram showing a structure of an image file created in the fourth embodiment.
Fig. 33 is a diagram showing an image file creation flow according to the fourth embodiment.

### DESCRIPTION OF THE PREFERRED EMBODIMENTS

Specific embodiments of the present invention will be described. However, the embodiments described later are merely examples for ease of understanding of the present invention, and are not intended to limit the present invention. That is, the present invention may be changed or improved from the embodiments described later without departing from the gist of the present invention. The present invention also includes its equivalents.

In the present specification, the concept of "device" includes a single device that exerts a specific function and includes a combination of a plurality of devices that are present independently and that are distributed but operate together (cooperate) to exert a specific function.
1.In addition, in the present invention, the term "user" is a person who uses the image file creation device according to the embodiment of the present invention, and, specifically, for example, a person who uses an imaging device described later equipped with the image file creation device according to the embodiment of the present invention. In addition, in the present specification, the term "person" means a main person that performs specific behavior, can include an individual, a group, a corporation, such as a company, an organization, and the like, and can also further include a computer and a device that constitute artificial intelligence (AI). The artificial intelligence implements intellectual functions, such as reasoning, prediction, and decision, by using a hardware resource and a software resource. An algorithm of the artificial intelligence is optional, and, for example, an expert system, case-based reasoning (CBR), a Bayesian network, or an inclusion architecture may be used.

In the present specification, the term "image" means data (image data) indicating gradation for each pixel, and a main example thereof is data of a still image, but the image may be moving image data composed of a plurality of frame images.

### <<Summary of Specific Embodiment of Present Invention>>

One embodiment of the present invention relates to an image file creation method and an image file creation device.

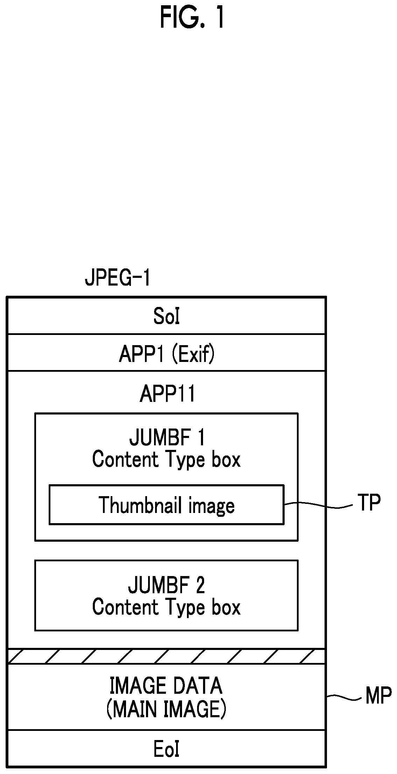

An image file is created by, for example, a known imaging device such as a digital camera. Alternatively, an information processing terminal may create the image file based on an image taken in from the imaging device or on an image received from a device on a network. The image file is created in accordance with a file format adopted by a device that creates the image file. Examples of the file format include Joint Photographic Experts Group (JPEG), Tagged Image File Format (TIFF), Graphics Interchange Format (GIF), Microsoft Windows bitmap image (BMP), Portable Network Graphics (PNG), and High Efficiency Image File Format (HEIF). The file format is reflected in a data structure of the image file, and, for example, in JPEG, as shown in Fig. 1, the image file is started from a marker segment of a start of image (SOI) and ends with a marker segment of an end of image (EOI).

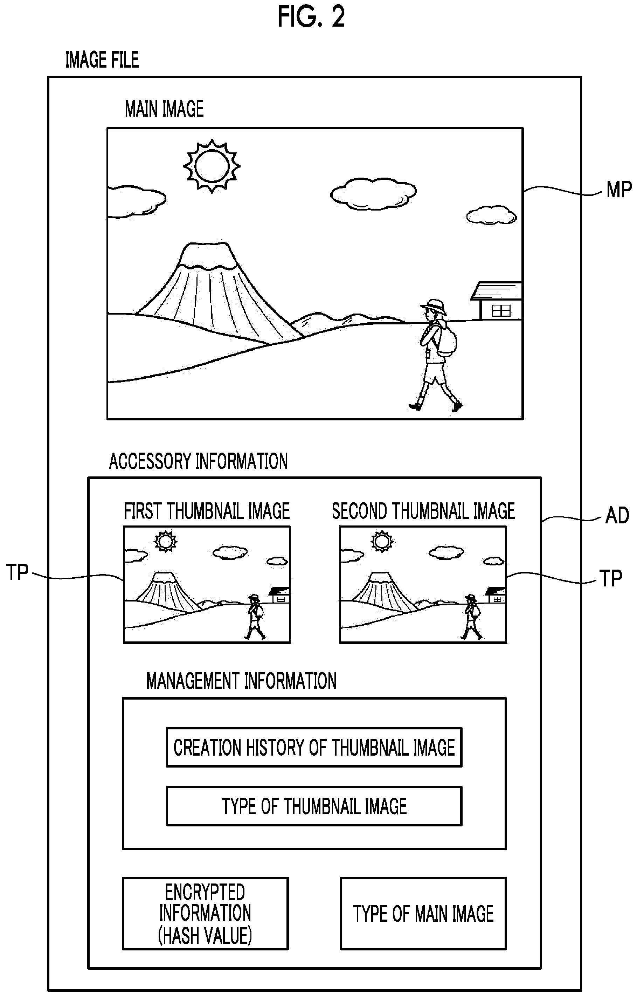

The image file includes, as shown in Fig. 2, a main image MP and accessory information AD. The main image MP is a main image in the image file, and is, for example, an image having a highest resolution or largest data capacity in the image file. The main image MP is acquired, for example, by imaging a subject via the imaging device. Specifically, the user presses a release button of the imaging device, and an imaging element provided in the imaging device generates an analog image signal by using a light signal received from the subject, and outputs the generated analog image signal. The analog image signal is converted into a RAW image that is a digital image. Correction processing, such as y correction, is executed on the RAW image, and the corrected RAW image is compressed by a predetermined compression method. As a result, the RAW image is developed, and the compressed image data indicating the developed image is created. It should be noted that the number of gradations (the number of bits) of the RAW image may be larger than the number of gradations (the number of bits) of the developed image.

The subject in the main image MP is an imaging target subject that is present within an imaging range of the imaging device, and is not limited to a specific tangible object, and also includes a non-tangible object such as a landscape, a scene, or a pattern.

The main image MP is changed by executing the correction processing. The correction on the image is data processing of changing a content, a color, an image quality, or the like of the image. The content of the image is the subject and a background of the image, an angle of view of the image, and the like. The angle of view is a range in the data processing in which the image is displayed or drawn, and the range thereof is defined as a two-dimensional coordinate space with two axes orthogonal to each other as coordinate axes. The color of the image is represented by gradation (color gradation) of a plurality of pixels constituting the image. The image quality of the image is determined by various factors including a resolution, the number of gradations, a color gamut, a spatial frequency, and a dynamic range.

The correction processing may be executed in the imaging device that captures the main image MP, or may be executed by the information processing terminal or the like that takes the main image MP from the imaging device. The correction processing may be executed based on an operation performed by the user, or may be automatically executed by a function of the imaging device or the information processing terminal. It should be noted that the main image MP that is a target of the correction processing may include a RAW image before the development.

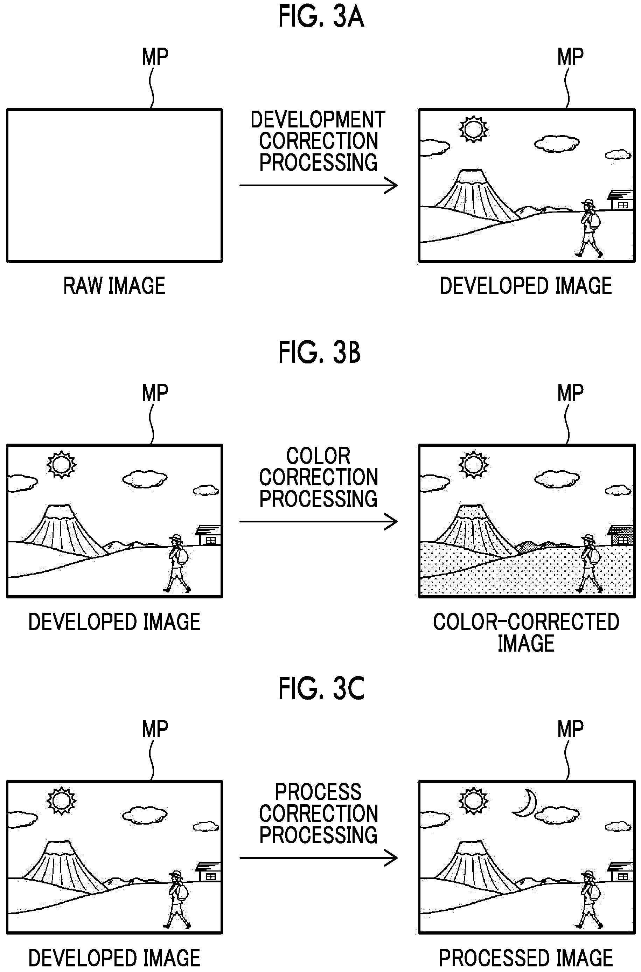

In one embodiment of the present invention, development correction processing, color correction processing, or process correction processing can be executed on the main image MP. As shown in Fig. 3A, the development correction processing is correction processing for development executed on the RAW image as the main image. Specifically, the correction processing, such as y correction, for developing the RAW image and displaying the RAW image corresponds to the development correction processing.

In the following description, an image obtained by executing the development correction processing on the RAW image as the main image will be referred to as a "developed image". The developed image corresponds to a first image according to the embodiment of the present invention.

The color correction processing is correction processing including a plurality of pieces of the color correction, is executed on the main image MP, and is executed on, for example, the developed image. In the main image MP on which the color correction processing is executed, a color of a corrected location is changed from a stage before the correction, as shown in Fig. 3B. Here, the development correction processing described above does not include a portion of the plurality of pieces of color correction that are executable in the color correction processing. In other words, the development correction processing is simplified correction processing as compared to the color correction processing.

Examples of the color correction include white balance correction, color gradation correction, and color reproduction correction. The color reproduction correction is color correction of adjusting a hue, a gradation, a saturation, a contrast, and the like of the image based on a reproduction mode selected by the user from among a plurality of reproduction modes related to the color of the image. The color reproduction mode is a classification based on the impression, the atmosphere, or the like of the entire image, and the plurality of color reproduction modes are prepared in advance on the device side and can be optionally selected by the user.

What kind of correction is executed in each color correction may be decided, for example, in accordance with imaging conditions based on the operation of the user. For example, in a case in which the user selects the white balance correction, the white balance correction may be executed in accordance with a light source during the imaging. Alternatively, a correction content in the color correction may be decided on in accordance with only the operation of the user.

In the following description, an image obtained by executing the color correction processing on the main image will be referred to as a "color-corrected image". The color-corrected image corresponds to a second image according to the embodiment of the present invention.

The process correction processing is correction processing of processing the subject in the main image, and is executed on the main image MP, and is, for example, executed on the developed image or the color-corrected image. The process correction processing includes a trimming process of extracting a region (hereinafter, a subject region) including the subject from the main image, and a process of adding text, an illustration, or the like to the main image that is the correction target. In addition, the process correction processing may include a process of combining a portion or all of another image with the main image as shown in Fig. 3C.

In the following description, an image obtained by executing the process correction processing on the main image will be referred to as a "processed image". The processed image corresponds to a third image according to the embodiment of the present invention.

In one embodiment of the present invention, the number of main images MP included in one image file is one, and the main image MP corresponds to any one of the developed image, the color-corrected image, or the processed image. Therefore, in a case in which the color correction processing is executed on the developed image as the main image MP included in the image file, the main image MP in the image file is replaced (overwritten) with the color-corrected image from the developed image. In addition, in a case in which the main image MP included in the image file is the developed image or the color-corrected image, and the process correction processing is executed on the main image MP, the main image MP in the image file is replaced with the processed image from the developed image or the color-corrected image.

It should be noted that, in a case in which the main image MP is changed by the correction processing, the main image MP before the correction (before the replacement) may be deleted from the image file. Alternatively, the main image MP before the correction may remain in the image file as a backup image (thumbnail image).

The accessory information AD is information related to the main image MP. Specifically, the accessory information AD can be written in a header region of the image file. For example, in JPEG XT Part 3, which is one type of JPEG, marker segments "APP1" and "APP11" as the header regions in which the accessory information can be written are provided as shown in Fig. 1. In the "APP1", accessory information related to an imaging date and time, an imaging location, the imaging conditions, and the like of the main image MP is stored as tag information. The "APP11" includes JPEG Universal Metadata Box Format (JUMBF) boxes as metadata storage regions, specifically, JUMBF1 and JUMBF2 boxes. Examples of the standard related to the accessory information in JPEG include an exchangeable image file format (Exif).

As shown in Fig. 1, the thumbnail image as the accessory information is stored in the APP11. The thumbnail image corresponds to the accessory image, is created by thinning out the main image MP, and has a resolution lower than the resolution of the main image MP. That is, by reducing the resolution as compared to the main image MP, a thumbnail image TP consisting of a reduced image of the main image MP as shown in Fig. 2 is generated, and the thumbnail image TP is stored in the APP11 as the accessory information.

In one embodiment of the present invention, the thumbnail image TP is acquired in conjunction with a change in the main image MP caused by the correction processing, and, specifically, the thumbnail image TP based on the main image MP after the change is generated in conjunction with the change in the main image MP. Specifically, the thumbnail image TP based on the developed image (hereinafter, a developed thumbnail image) is generated in conjunction with the change in the main image MP (specifically, the RAW image) caused by the development correction processing. In addition, the thumbnail image TP based on the color-corrected image (hereinafter, a color-corrected thumbnail image) is generated in conjunction with the change in the main image MP caused by the color correction processing. In addition, the thumbnail image TP based on the processed image (hereinafter, a processed thumbnail image) is generated in conjunction with the change in the main image MP caused by the process correction processing.

The developed thumbnail image, the color-corrected thumbnail image, and the processed thumbnail image represent types of the accessory images, and correspond to a first accessory image, a second accessory image, and a third accessory image according to the embodiment of the present invention, respectively. In one embodiment of the present invention, the user can designate which type of the thumbnail image (accessory image) is acquired. The type of the thumbnail image designated by the user is acquired, and the acquired thumbnail image is stored in the image file as the accessory information of the main image MP.

Here, in one embodiment of the present invention, the generation of the thumbnail image corresponds to the acquisition of the thumbnail image. However, the present invention is not limited to this, and the thumbnail image may be acquired by first generating a plurality of thumbnail images and then selecting an image file to be stored from among the plurality of thumbnail images.

It should be noted that the thumbnail image TP may be an image obtained by reducing the entire main image MP. Alternatively, the thumbnail image TP may be an image obtained by reducing an extracted image obtained by extracting a part of the main image MP, for example, a region of the main subject. The main subject is a subject that is selected based on, for example, a positional relationship with a focus position of the imaging device or a position of a visual line position of the user during the imaging, from among the subjects in the main image MP. In addition, the main subject may be selected based on an image quality such as resolution perception (specifically, a degree of blurriness or shake) or the sharpness of the main image MP. Alternatively, the subject designated by the user in the main image MP may be selected as the main subject.

In addition, a compression method of the thumbnail image TP may be the same as or different from the compression method of the main image MP. An image that is the basis of the thumbnail image TP (hereinafter, also referred to as an original image) is the main image MP at a point in time of generation of the thumbnail image TP.

The number of thumbnail images TP that can be stored in one image file need only be one or more, and a plurality of thumbnail images TP may be stored in one image file. That is, in a case in which two or more types of the thumbnail images among the developed thumbnail image, the color-corrected thumbnail image, and the processed thumbnail image are generated, the image file may include the two or more types of the thumbnail images. Alternatively, the number of thumbnail images TP that can be stored in the image file may be only one.

As shown in Fig. 2, the accessory information AD may store management information related to the thumbnail image TP. The management information includes, for example, information related to a creation history (creation date and time) of the thumbnail image, information related to the type of the thumbnail image, and the like. The information related to the type of the thumbnail image is information indicating whether the thumbnail image stored in the image file is the developed thumbnail image, the color-corrected thumbnail image, or the processed thumbnail image. The information may be text information describing the type of the thumbnail image or may be information consisting of an identification code corresponding to the type of the thumbnail image.

In addition, as shown in Fig. 2, the accessory information AD may include information obtained by encrypting the thumbnail image for the purpose of preventing the thumbnail image from being tampered with. Specifically, the accessory information AD may include a hash value obtained by hashing the thumbnail image. The information stored in the image file for the purpose of tampering prevention is not limited to the hash value, and may be information obtained by encrypting or encoding the thumbnail image by using a method other than hashing.

Further, as shown in Fig. 2, the accessory information AD may include information related to the type of the main image MP stored in the image file. The information indicates whether the main image MP is the developed image, the color-corrected image, or the processed image.

### <<Configuration Example of Image File Creation Device According to One Embodiment of Present Invention>>

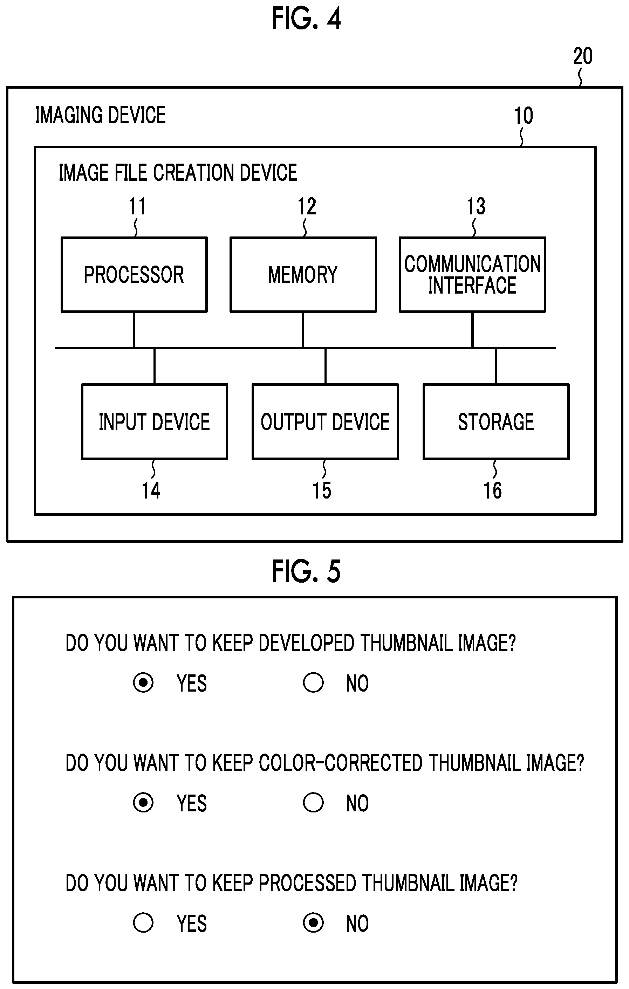

The image file creation device (hereinafter, an image file creation device 10) according to one embodiment of the present invention comprises a processor 11, a memory 12, and a communication interface 13 as shown in Fig. 4.

The processor 11 is configured by, for example, a central processing unit (CPU), a graphics processing unit (GPU), a digital signal processor (DSP), or a tensor processing unit (TPU). The memory 12 is configured by, for example, semiconductor memories such as a read-only memory (ROM) and a random-access memory (RAM). The communication interface 13 is configured by, for example, a network interface card or a communication interface board.

A program (hereinafter, an image file creation program) for creating the image file is stored in the memory 12. The image file creation program is a program causing the processor 11 to carry out each step in the image file creation method described later. The image file creation program may be acquired by being read from a computer-readable recording medium, or may be acquired by being downloaded via a communication network such as the Internet or an intranet.

The image file creation device 10 can communicate with another device via the communication interface 13, and transmit and receive data to and from the device. The image file creation device 10 further comprises an input device 14 and an output device 15 as shown in Fig. 4. The input device 14 includes a device that receives the operation of the user, such as a touch panel and a cursor button. The output device 15 includes a display device, such as a display.

Further, the image file creation device 10 can freely access various types of data stored in a storage 16. The data stored in the storage 16 includes data necessary for creating the image file, such as the image, the imaging conditions of the image, information related to the correction processing of the image, and information related to the operation received from a user. In addition, the storage 16 stores the created image file.

It should be noted that the storage 16 may be built in or externally attached to the image file creation device 10, or may be configured by a network-attached storage (NAS) or the like. Alternatively, the storage 16 may be an external device that can communicate with the image file creation device 10 via the Internet or a mobile communication network, that is, for example, an online storage.

In one embodiment of the present invention, the image file creation device 10 is mounted in the imaging device such as the digital camera as shown in Fig. 4. A mechanical configuration of the imaging device (hereinafter, an imaging device 20) comprising the image file creation device 10 is substantially the same as a known imaging device having a function of creating the image file.

That is, the imaging device 20 images the subject in accordance with preset imaging conditions, to acquire the RAW image as the main image MP. The imaging conditions include an exposure time (exposure amount), an ISO sensitivity, a focus position at a point in time of the imaging, and a focal length. Then, the imaging device 20 develops the RAW image and appropriately executes the color correction processing or the process correction processing on the developed image. As a result, the main image MP is acquired. In addition, the imaging device 20 generates the accessory information, such as the thumbnail image TP, based on the main image MP, and creates the image file including the main image MP and the accessory information.

In one embodiment of the present invention, the imaging device 20 may have an autofocus (AF) function of automatically focusing on a predetermined position within the imaging range during the imaging, and a function of specifying a focal position (AF point). The AF point is specified as a coordinate position in a case in which a reference position in the imaging range is set as an origin. In addition, the imaging device 20 may comprise a finder through which the user looks into during the imaging. In this case, the imaging device 20 may have a function of detecting the position of the visual line of the user and a position of a pupil of the user during the use of the finder, to specify the visual line position of the user. The visual line position of the user corresponds to a position of an intersection between the visual line of the user looking into the finder and a display screen in the finder.

In addition, in one embodiment of the present invention, the imaging device 20 may have a function of changing a position of the imaging element (that is, an imaging position) by shifting the imaging element in a longitudinal direction and a lateral direction by one pixel or half a pixel in the imaging device 20, that is, a so-called pixel shift function. Here, the imaging position is a position of each pixel in the imaging element.

In addition, in one embodiment of the present invention, the imaging device 20 may have a function of carrying out the imaging in a live view mode before the capturing of the main image MP. With this function, for example, in a case in which the user half-presses the release button as an operation for imaging preparation, the subject within the imaging range is continuously imaged at a predetermined time interval with the half-pressing as a trigger. An image captured in the live view mode (live view image) is displayed on the display of the imaging device 20 in real time as a live preview image. The imaging interval of the image in the live view mode may be a constant interval, or the imaging interval may be changed depending on an imaging situation or the like.

In addition, the live view image is temporarily stored in the memory 12 or the storage 16 as the image captured in the same imaging range as the main image before the capturing of the main image. The live view image temporarily stored in the memory 12 or the storage 16 may be all of the live view images captured before the capturing of the main image or may be some of the live view images.

In addition, in one embodiment of the present invention, the imaging device 20 may have a function of continuing the imaging in a rec view mode after the capturing of the main image. With this function, it is possible to image the subject in the imaging device at a point in time at which a certain time has elapsed since a point in time at which the user presses the release button. An image captured in the rec view mode (rec view image) is temporarily stored in the memory 12 or the storage 16. It should be noted that, in the imaging in the rec view mode, the subject within the imaging range may be continuously imaged at a predetermined time interval after the capturing of the main image. In this case, the imaging interval of the image in the rec view mode may be constant, or the imaging interval may be changed depending on the imaging situation or the like.

In one embodiment of the present invention, the imaging device 20 may have a function of analyzing the main image and detecting the subject region in the main image. As a method of detecting the subject region, for example, a known subject detection technique can be used. Further, in one embodiment of the present invention, the imaging device 20 may have a function of analyzing the detected subject region to specify the resolution perception of the subject (specifically, the degree of blurriness or shake, or the like) or the sharpness.

Further, in one embodiment of the present invention, the imaging device 20 may have a function of specifying the type of the subject present in the subject region, and may have a function of specifying a facial expression in a case in which the subject is a person. As a method of specifying the type, the facial expression, or the like of the subject, for example, a known subject recognition technique can be used.

Furthermore, in one embodiment of the present invention, the imaging device 20 may have a function of calculating a score for the subject region (that is, the image of the subject) based on the resolution perception, the sharpness, the facial expression, and the like of the specified subject. As a method of calculating the score from each evaluation item related to the image of the subject, for example, the technique disclosed in JP2019-118021A can be used.

### <<Generation of Thumbnail Image>>

In one embodiment of the present invention, in a case in which the correction processing is executed on the main image MP in the imaging device 20 that captures the main image MP, the acquisition (generation) of the thumbnail image TP is carried out. For example, in a case in which the development correction processing is executed on the RAW image as the main image MP, the developed thumbnail image is generated based on the developed main image, that is, the developed image.

In one embodiment of the present invention, it is possible to set which correction processing is executed on the main image MP to generate the thumbnail image, in other words, the type of the thumbnail image to be generated. Specifically, in a stage before the capturing of the main image MP, a setting screen shown in Fig. 5 is displayed on the display of the imaging device 20. In this setting screen, the developed thumbnail image, the color-corrected thumbnail image, and the processed thumbnail image as the type of the thumbnail image are displayed in a selectable manner. The user designates one or more types of the thumbnail images on the setting screen.

In a case in which the type of the thumbnail image is designated by the user and the correction processing corresponding to the designated type is executed on the main image MP, the thumbnail image of the type is acquired. For example, in a case in which the user designates the "color-corrected thumbnail image" and then the color correction processing is executed on the main image MP, the color-corrected thumbnail image is generated and acquired.

It should be noted that, in the setting screen of Fig. 5, the types of the thumbnail images are displayed in a selectable manner, but the display content is not particularly limited as long as the type of the generated thumbnail image can be specified. For example, explanatory text for each correction processing or a sample image on which each correction processing is executed may be displayed on the screen in a selectable manner. In this case, in a case in which the user selects any type of the correction processing and the selected type of the correction processing is executed on the main image MP, the thumbnail image corresponding to the correction processing may be generated. By receiving the type of the correction processing from the user in this manner, the type of the generated thumbnail image may be indirectly received.

In addition, the type of the thumbnail image is not limited to a case of being received in advance in a stage before the capturing of the main image MP, and, for example, may be received at a point in time of the execution of the correction processing on the main image MP or immediately after the execution of the correction processing. In addition, each time the correction processing is executed on the main image MP, the user may be asked whether or not to generate the thumbnail image corresponding to the correction processing.

In addition, in one embodiment of the present invention, the thumbnail image includes a first thumbnail image. The first thumbnail image is generated by reducing the entirety or a part of the main image at a point in time of the generation of the thumbnail image. In addition, the first thumbnail image is an image that is not changed in conjunction with the change in the main image caused by the correction processing in a case in which the correction processing is executed on the main image that is the original image. For example, it is assumed that the developed thumbnail image is generated as the first thumbnail image. In this case, even in a case in which the color correction processing or the process correction processing is executed on the developed image that is the original image after the generation of the developed thumbnail image, the developed thumbnail image is maintained in a state at a point in time of the creation without being corrected.

By generating (acquiring) the first thumbnail image, the first thumbnail image can be used as evidence for proving the presence of the main image that is the original image. That is, even in a case in which the main image MP that is the original image is changed by the correction processing after the generation of the first thumbnail image, the original main image MP before the correction can be checked by referring to the first thumbnail image. Accordingly, in a case in which unintended correction processing, such as the tampering, is executed on the main image MP, the user can notice the tampering through the first thumbnail image generated based on the main image MP before the correction.

A configuration in which the first thumbnail image is not corrected in conjunction with the correction of the main image MP is not particularly limited. For example, the first thumbnail image may be made uncorrectable by storing the first thumbnail image in a region in which correction (change) cannot be made in the image file, specifically, the header region "APP11" described above. In addition, by storing the information for limiting the correction of the first thumbnail image in the header region, the first thumbnail image may be made uncorrectable. Here, the information for limiting the correction of the first thumbnail image may be information (for example, the hash value) obtained by encrypting the first thumbnail image.

In one embodiment of the present invention, the thumbnail image further includes a second thumbnail image in addition to the first thumbnail image. The second thumbnail image is generated by reducing the entirety or a part of the main image MP at the point in time of the generation of the thumbnail image. In addition, the second thumbnail image is an image that is changed in conjunction with the change in the main image MP caused by the correction processing in a case in which the correction processing is executed on the main image MP that is the original image. That is, the second thumbnail image corresponds to a variable accessory image that is changed in conjunction with the change in the main image MP caused by the correction processing.

### <<Image File Creation Device According to Each Embodiment of Present Invention>>

As an embodiment related to the present invention, a plurality of specific examples will be described regarding the functions and the operations of the image file creation device. It should be noted that, in second and subsequent embodiments, a difference from the previous embodiment will be mainly described, and the common contents will be omitted as appropriate.

In addition, the embodiments of the present invention may be a combination of two or more embodiments among a plurality of embodiments (first to fourth embodiments) described later.

### [First Embodiment]

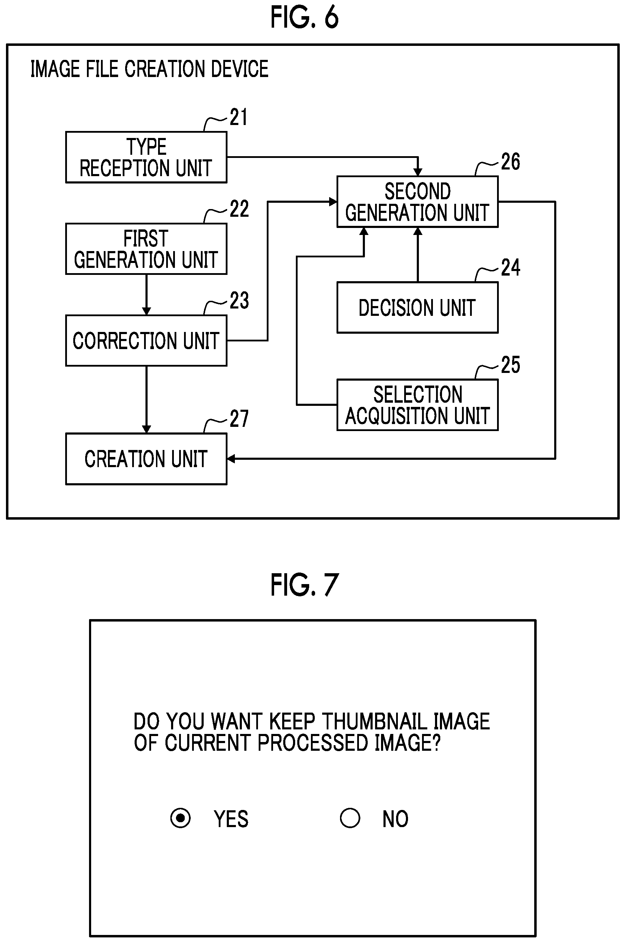

As shown in Fig. 6, the image file creation device 10 according to the first embodiment of the present invention includes a type reception unit 21, a first generation unit 22, a correction unit 23, a decision unit 24, a selection acquisition unit 25, a second generation unit 26, and a creation unit 27. These functional units are implemented by cooperation between a hardware device of the image file creation device 10 and software including the image file creation program. In addition, some functions may be implemented by using artificial intelligence (AI). Hereinafter, each of the functional units will be described.

### (Type Reception Unit)

The type reception unit 21 receives the type of the thumbnail image TP in association with the correction processing on the main image MP. The type reception unit 21 displays, for example, the setting screen of Fig. 5 on the display of the imaging device 20. On the same screen, the developed thumbnail image, the color-corrected thumbnail image, and the processed thumbnail image are displayed in a selectable manner as the types of the thumbnail images. In a case in which the user designates at least one of these types, the type reception unit 21 receives a designation result as the type of the thumbnail image. In this case, the user can designate two or more types from among the three types of the thumbnail images, and in this case, the type reception unit 21 receives the two or more types.

It should be noted that a timing at which the type reception unit 21 receives the type of the thumbnail image can be optionally decided on as long as the timing is before the thumbnail image corresponding to the type is generated. In addition, in a case in which the user designates the type of the correction processing on the main image MP, the type reception unit 21 may receive the designated type of the correction processing as the type of the thumbnail image.

### (First Generation Unit)

The first generation unit 22 controls each unit of the imaging device 20 to generate the main image MP by imaging the subject present within the imaging range of the imaging device 20, with the release button of the imaging device 20 fully pressed by the user as a trigger. In this case, the first generation unit 22 images the subject in accordance with the set imaging conditions. As a result, the main image MP, specifically, the RAW image, is generated in accordance with the imaging conditions.

### (Correction Unit)

The correction unit 23 executes the correction processing on the main image MP automatically or in accordance with an instruction of the user. For example, in a case in which the RAW image is generated as the main image MP, the correction unit 23 executes the development correction on the RAW image. In addition, in a case in which the user issues an instruction to execute the color correction on the developed image as the main image MP, the correction unit 23 executes the color correction processing corresponding to the instruction of the user on the developed image. In addition, in a case in which the user performs a process operation on the developed image or the color-corrected image as the main image MP, the correction unit 23 executes the process correction processing on the developed image or the color-corrected image based on the process operation of the user.

In the first embodiment, the image file creation device 10 including the correction unit 23 is mounted in the imaging device 20. Therefore, in the first embodiment, the correction processing via the correction unit 23 is executed in the imaging device 20 that captures the main image MP. Since the correction processing is executed in the imaging device 20 in this manner, the user can more easily correct the main image MP.

### (Decision Unit)

In a case in which the correction unit 23 executes the process correction processing on the main image MP, the decision unit 24 decides whether or not to generate (acquire) the processed thumbnail image, that is, whether or not to carry out an acquisition step described later. That is, in the first embodiment, the processed thumbnail image is generated only in a case in which the process correction processing is executed and the decision unit 24 decides to generate the processed thumbnail image. As a result, the burden of the data processing is reduced as compared to a case in which the processed thumbnail image is generated each time the process correction processing is executed. In addition, by suppressing the number of generated processed thumbnail images, it is possible to reduce the required data capacity.

In a first example of the first embodiment, the decision unit 24 automatically decides whether or not to generate the processed thumbnail image (that is, whether or not to carry out the acquisition step) based on the correction content in the process correction processing. The correction content is a content in which the subject or the angle of view of the main image MP is changed by the process correction processing, and is, specifically, a degree of change (correction amount) in the main image MP caused by the correction processing. The correction content can be quantitatively specified, for example, by comparing the main images MP before and after the correction and calculating the change amount. In a case in which the correction content satisfies a predetermined condition, for example, in a case in which the correction amount is equal to or greater than a reference value, the decision unit 24 automatically decides to acquire the processed thumbnail image in conjunction with the execution of the process correction processing.

In addition, in a second example of the first embodiment, in a case in which the process correction processing is executed on the main image MP, the decision unit 24 acquires the selection of the user regarding whether or not to generate (acquire) the processed thumbnail image, and makes a decision.

### (Selection Acquisition Unit)

In a case in which the process correction processing is executed on the main image MP, the decision unit 24 automatically makes a decision or the selection acquisition unit 25 acquires the selection of the user regarding whether or not to generate (acquire) the processed thumbnail image. In the latter case, in a case in which the process correction processing is executed on the main image, a selection screen shown in Fig. 7 is displayed on the display of the imaging device 20. On the selection screen, options of whether or not to generate the processed thumbnail image are displayed. The selection acquisition unit 25 acquires the selection of the user regarding the generation of the processed thumbnail image through the selection screen. Then, the processed thumbnail image is generated only in a case in which the process correction processing is executed and the user selects the generation of the processed thumbnail image. As a result, the burden of the data processing is reduced as compared to a case in which the processed thumbnail image is generated each time the process correction processing is executed. In addition, by suppressing the number of generated processed thumbnail images, it is possible to reduce the required data capacity.

As described above, in the first embodiment, whether or not to generate the processed thumbnail image can be decided by the decision unit 24 based on the correction content of the process correction processing. In addition, whether or not to generate the processed thumbnail image is decided based on the selection of the user acquired by the selection acquisition unit 25. In addition, in a case of deciding whether or not to generate the processed thumbnail image, the user may designate whether to use the automatic decision based on the correction content or the selection of the user.

### (Second Generation Unit)

The second generation unit 26 generates the accessory information related to the main image MP. The accessory information generated by the second generation unit 26 includes the thumbnail image TP. Specifically, in a case in which the correction processing via the correction unit 23 is executed, the second generation unit 26 generates the thumbnail image TP based on the corrected main image MP in conjunction with the execution of the correction processing. As a result, the thumbnail image TP as the accessory information related to the main image MP is acquired.

The thumbnail image TP is generated by reducing the entirety or a part of the main image MP at the point in time of the generation of the thumbnail image TP. In a case in which the thumbnail image TP is generated by reducing a part of the main image MP, the second generation unit 26 generates the thumbnail image TP by reducing a region designated by the user or a region selected on the imaging device 20 side in the main image MP. Alternatively, the region selected on the imaging device 20 side may be, for example, a region in which the main subject of the main image MP is present.

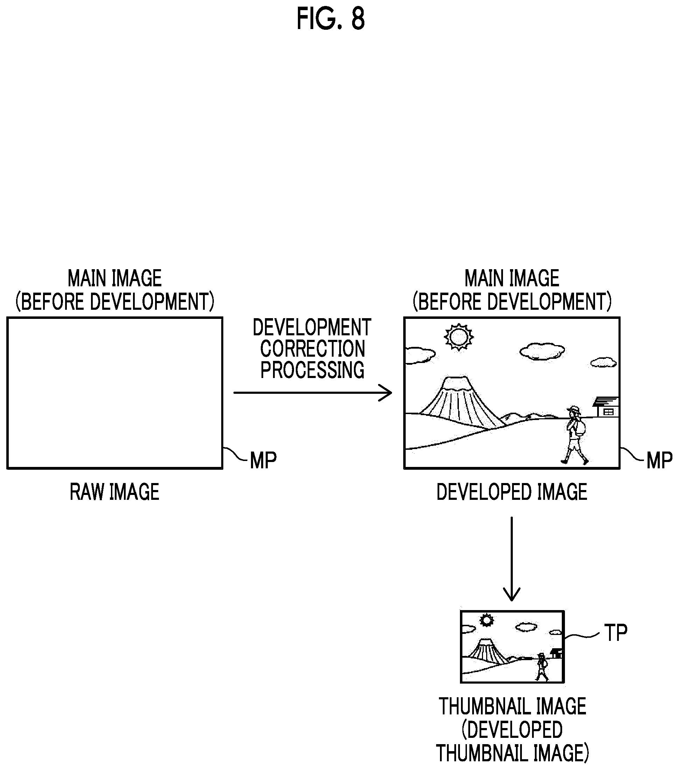

In the first embodiment, the second generation unit 26 generates the thumbnail image TP based on the type of the thumbnail image received by the type reception unit 21. For example, it is assumed that the type of the thumbnail image received by the type reception unit 21 is the "developed thumbnail image". In this case, as shown in Fig. 8, in a case in which the development correction processing is executed on the RAW image as the main image MP, the second generation unit 26 generates the developed thumbnail image based on the developed image that is the corrected main image MP in conjunction with the execution of the development correction processing.

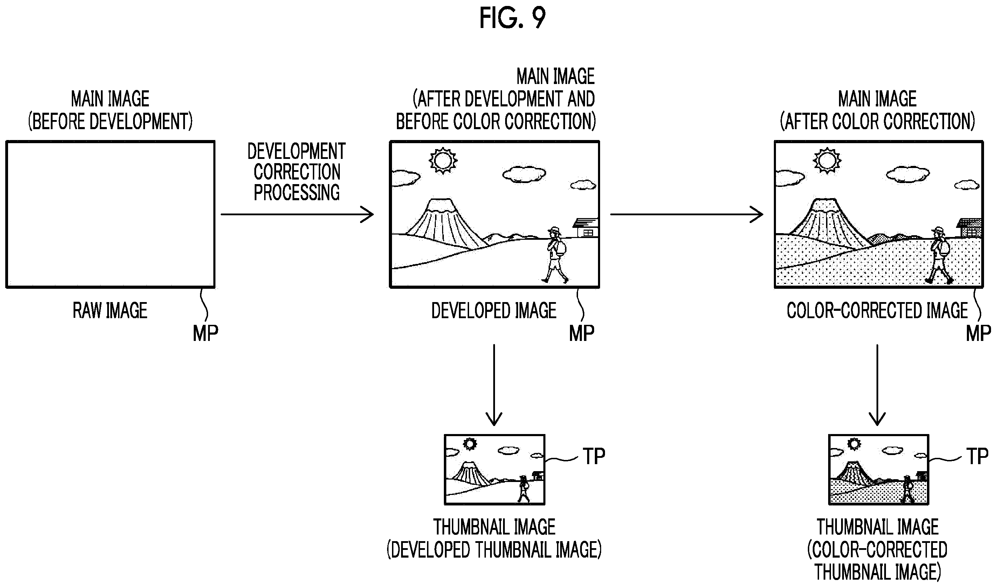

As a second example, it is assumed that the types of the thumbnail images received by the type reception unit 21 are the "developed thumbnail image" and the "color-corrected thumbnail image". In this case, as shown in Fig. 9, in a case in which the development correction processing is executed on the RAW image as the main image MP, the second generation unit 26 generates the developed thumbnail image based on the developed image in conjunction with the execution of the development correction processing. In addition, in a case in which the color correction processing is executed on the developed image, the second generation unit 26 generates the color-corrected thumbnail image based on the color-corrected image that is the corrected main image MP in conjunction with the execution of the color correction processing.

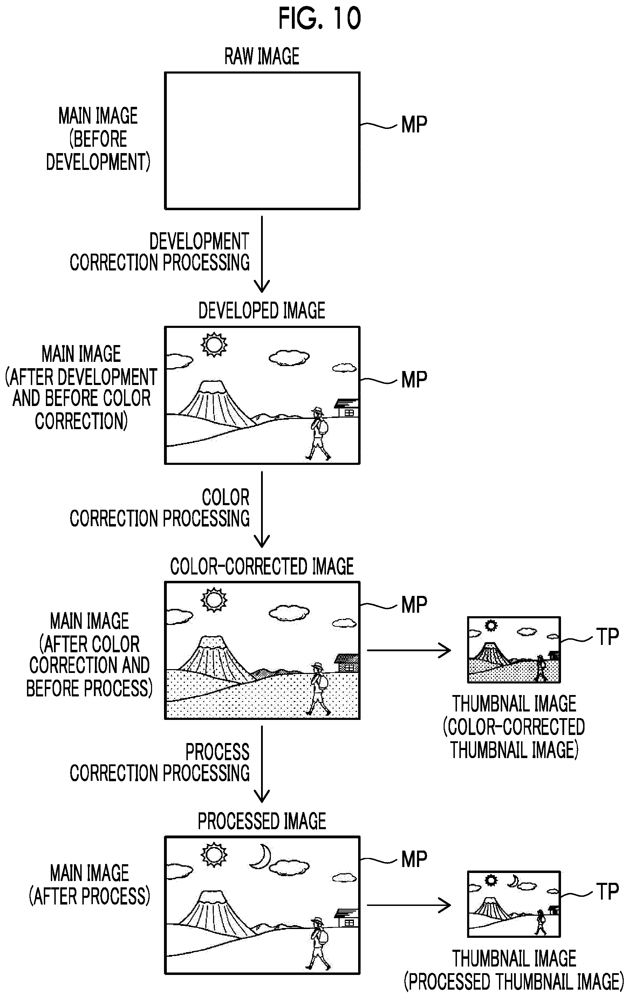

As a third example, it is assumed that the types of the thumbnail images received by the type reception unit 21 are the "color-corrected thumbnail image" and the "processed thumbnail image". In this case, the thumbnail image (developed thumbnail image) is not generated at a point in time at which the development correction processing is executed on the RAW image. On the other hand, as shown in Fig. 10, in a case in which the color correction processing is executed on the developed image that is the main image MP, the second generation unit 26 generates the color-corrected thumbnail image based on the color-corrected image in conjunction with the execution of the color correction processing. In addition, in a case in which the process correction processing is executed on the developed image or the color-corrected image, the second generation unit 26 generates the processed thumbnail image based on the processed image in conjunction with the execution of the process correction processing.

In this way, in the first embodiment, the thumbnail image TP is generated based on the type of the thumbnail image received from the user. Accordingly, in a case in which the correction processing corresponding to the type received from the user is executed on the main image MP, the thumbnail image can be generated based on the corrected main image MP and stored in the image file.

In addition, in the first embodiment, as described above, in a case in which the process correction processing is executed on the main image MP, the decision unit 24 decides whether or not to acquire the processed thumbnail image. In a case in which the decision unit 24 decides to acquire the processed thumbnail image, the second generation unit 26 generates the processed thumbnail image.

In addition, in the first embodiment, as described above, in a case in which the process correction processing is executed on the main image MP, the selection acquisition unit 25 acquires the selection of the user regarding whether or not to acquire the processed thumbnail image. In a case in which the selection acquisition unit 25 acquires the selection to acquire the processed thumbnail, the second generation unit 26 generates the processed thumbnail image in accordance with the selection.

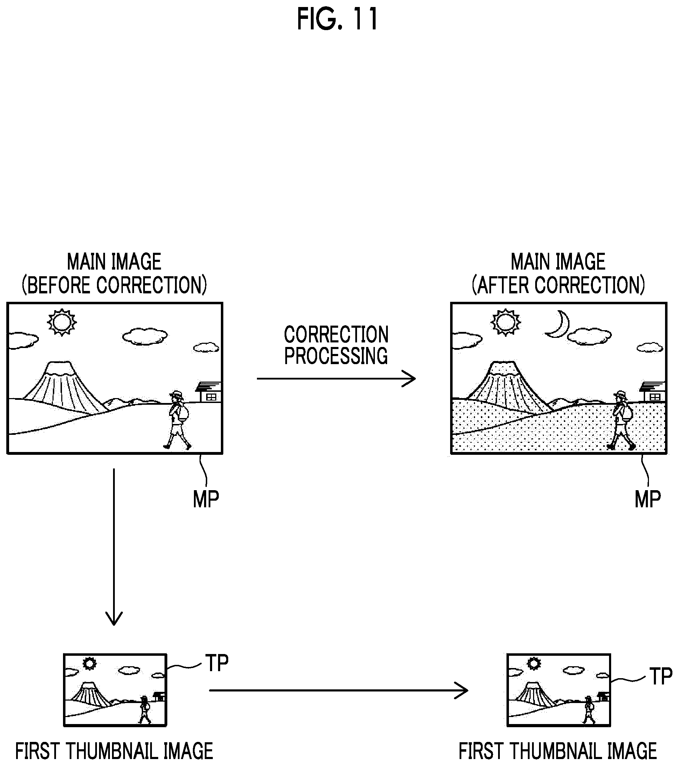

In the first embodiment, the first thumbnail image is generated (acquired) as the thumbnail image. In a case in which the correction processing is executed on the main image MP that is the original image, the first thumbnail image is maintained as the image at a point in time of the acquisition without being changed in conjunction with the change in the main image caused by the correction processing as shown in Fig. 11. That is, the first thumbnail image is an image having high reliability (credibility) as evidence for proving what kind of image the main image MP is at the point in time of the generation of the first thumbnail image. Therefore, even in a case in which unintended correction, such as the tampering, is carried out on the main image MP, in a case in which the first thumbnail image based on the main image MP before the correction is acquired, it is possible to recognize that the correction is carried out.

In addition, in the first embodiment, the second generation unit 26 may generate the second thumbnail image that is correctable, along with the first thumbnail image. The second thumbnail image is changed in conjunction with the change in the main image MP caused by the correction processing in a case in which the correction processing is executed on the main image MP that is the original image. In a case in which such a second thumbnail image is acquired along with the first thumbnail image, both of the thumbnail images can be compared to easily ascertain whether or not the correction processing is executed on the main image MP that is the original image.

It should be noted that the present invention is not limited to the above-described case, and the second generation unit 26 may generate only the first thumbnail image without generating the second thumbnail image.

Further, in the first embodiment, the second generation unit 26 generates the management information indicating the type of the generated thumbnail image as the accessory information related to the main image MP. As a result, it is possible to easily recognize which type of the thumbnail image is acquired for the main image MP.

Furthermore, in the first embodiment, the second generation unit 26 generates the information obtained by encrypting the generated thumbnail image as the accessory information related to the main image MP. The information includes the hash value obtained by hashing the thumbnail image. By acquiring the information obtained by encrypting the thumbnail image in this way, it is possible to find the modification and change in the thumbnail image itself. As a result, the credibility (security) of the thumbnail image, particularly the first thumbnail image, can be further enhanced.

### (Creation Unit)

The creation unit 27 creates the image file, specifically, creates the image file in the file format that is initially set or selected by the user. The image file is created, for example, at the point in time at which the main image MP is acquired. Further, the main image MP in the image file is replaced with the corrected image each time the correction processing is executed on the main image MP. For example, it is assumed that the process correction processing is executed on the developed image or the color-corrected image as the main image MP included in the image file, to acquire the processed image. In this case, the creation unit 27 replaces the main image MP included in the image file with the processed image from the developed image or the color-corrected image.

It should be noted that the developed image or the color-corrected image, which is the main image MP before the replacement, may be deleted or may remain in the image file.

In addition, in a case in which the second generation unit 26 generates the accessory information related to the main image MP, the creation unit 27 includes the generated accessory information in the image file. Specifically, in a case in which the second generation unit 26 generates the thumbnail image TP based on the main image MP, the creation unit 27 stores the thumbnail image TP in the "APP11" that is the header region of the image file.

In addition, in a case in which the correction processing is executed on the main image MP a plurality of times, and the thumbnail image TP based on the corrected main image is newly created each time the correction processing is executed, the newly generated thumbnail image TP is added to the image file. That is, in the first embodiment, in a case in which two or more types of the thumbnail images among the developed thumbnail image, the color-corrected thumbnail image, and the processed thumbnail image are generated, the image file includes the two or more types of the thumbnail images.

The thumbnail image TP included in the image file includes the first thumbnail image that is not changed in conjunction with the correction of the main image MP. In addition, the thumbnail image TP in the image file may include the second thumbnail image as the variable accessory image that is changed in conjunction with the correction of the main image MP, in addition to the first thumbnail image. In addition, the image file may include information other than the thumbnail image TP generated by the second generation unit 26, specifically, the information related to the type of the thumbnail image, the hash value of the thumbnail image, and the like (see Fig. 2).

### (Operation Example of Image File Creation Device According to First Embodiment)

Next, as an operation example of the image file creation device 10 according to the first embodiment, an image file creation flow using the same device will be described. In the image file creation flow described later, the image file creation method according to the embodiment of the present invention is used. That is, each step in the image file creation flow described later corresponds to a constituent element of the image file creation method according to the embodiment of the present invention.

It should be noted that the following flow is merely an example, and some steps in the flow may be deleted, new steps may be added to the flow, or the execution order of two steps in the flow may be interchanged within a range not departing from the gist of the present invention.

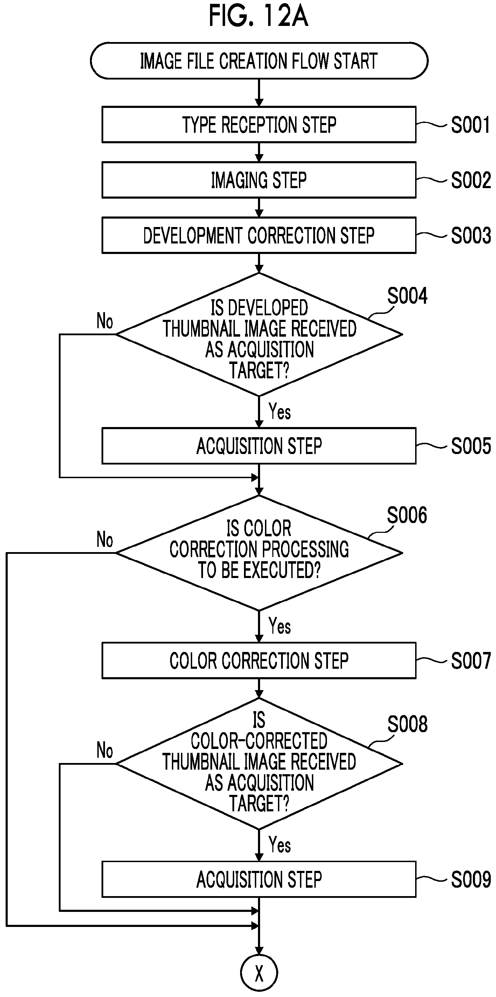

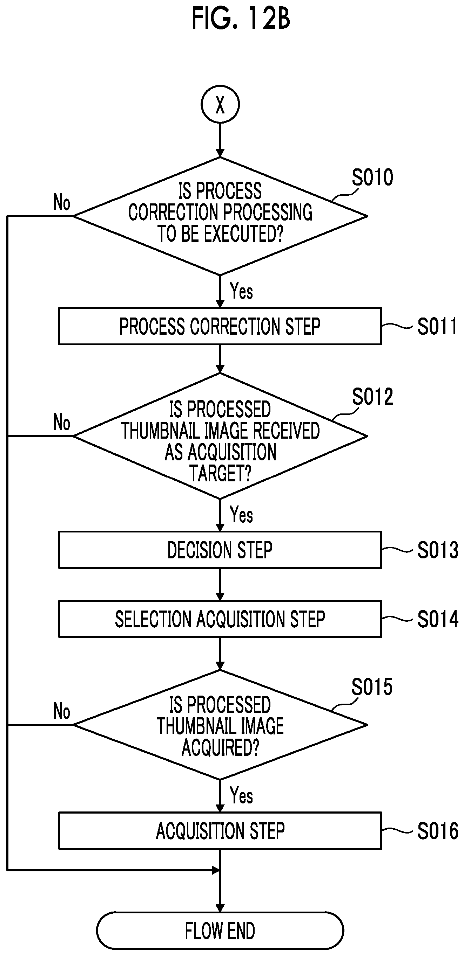

Each step in the image file creation flow according to the first embodiment is carried out in an order shown in Figs. 12A and 12B by the processor 11 provided in the image file creation device 10. That is, the processor 11 executes, in each step in the image file creation flow, processing corresponding to each step among pieces of the data processing defined by the image file creation program.

In the image file creation flow according to the first embodiment, first, the processor 11 carries out a type reception step (S001). In the type reception step, the screen shown in Fig. 5 is displayed on the display of the imaging device 20, and the type of the thumbnail that is an acquisition target is received in association with the correction processing for the main image MP. In addition, in the type reception step, at least one of the developed thumbnail image, the color-corrected thumbnail image, or the processed thumbnail image is received as the type of the acquisition target. It should be noted that the type reception step may be carried out, for example, after the imaging device 20 is activated, or may be carried out immediately after an imaging step or each correction step described later.

Next, in a case in which the release button of the imaging device 20 is pressed, the processor 11 carries out the imaging step at the point in time at which the release button is pressed (S002). In the imaging step, each unit of the imaging device 20 is controlled to image the subject within the imaging range, so that the main image MP is acquired. The main image MP acquired at a point in time of the imaging step is an undeveloped RAW image. Then, the image file including the main image MP is created in conjunction with the acquisition of the main image MP.

Next, the processor 11 carries out a development correction step, and in this step, executes the development correction processing on the RAW image obtained in the imaging step (S003). As a result, the developed image is acquired as the main image MP.

Then, in a case in which the "developed thumbnail image" is received as the type of the thumbnail image that is the acquisition target in the type reception step (S004), the processor 11 carries out the acquisition step in conjunction with the carried-out development correction step (S005). In the acquisition step, the developed thumbnail image is generated by the function of the imaging device 20 based on the entirety or a part of the developed image. As a result, the developed thumbnail image is acquired, and the developed thumbnail image is stored in the header region of the image file as the accessory information of the main image MP. In addition, the acquired developed thumbnail image is the first thumbnail image, and is stored in the image file in an aspect in which the developed thumbnail image is not changed in conjunction with the change in the main image MP even in a case in which the main image MP is corrected afterwards.

It should be noted that, in the acquisition step, the second thumbnail image that is changed in conjunction with the change in the main image MP may be acquired along with the first thumbnail image as the developed thumbnail image.

Next, in a case in which the user performs the operation for the color correction on the main image MP (S006), the processor 11 carries out a color correction step in accordance with the operation of the user (S007). In this step, the color correction processing is executed on the developed image to acquire the color-corrected image as the main image MP. In conjunction with this, the main image MP in the image file is replaced with the color-corrected image from the developed image.

In addition, in a case in which the "color-corrected thumbnail image" is received as the type of the thumbnail image that is the acquisition target in the type reception step (S008), the processor 11 carries out the acquisition step in conjunction with the carried-out color correction step (S009). In the acquisition step, the color-corrected thumbnail image is generated by the function of the imaging device 20 based on the entirety or a part of the color-corrected image. As a result, the color-corrected thumbnail image is acquired, and the color-corrected thumbnail image is stored in the image file as the accessory information of the main image MP. In addition, the acquired color-corrected thumbnail image is the first thumbnail image, and is stored in the image file in an aspect in which the color-corrected thumbnail image is not changed in conjunction with the change in the main image MP even in a case in which the main image MP is corrected afterwards.

It should be noted that, in the acquisition step, the second thumbnail image that is changed in conjunction with the change in the main image MP may be acquired along with the first thumbnail image as the color-corrected thumbnail image.

Next, in a case in which the user performs the operation for the process correction on the main image MP (S010), the processor 11 carries out a process correction step in accordance with the operation of the user (S011). In this step, the process correction processing is executed on the main image MP (specifically, the developed image or the color-corrected image) to acquire the processed image as the main image MP. In conjunction with this, the main image MP in the image file is replaced with the processed image from the developed image or the color-corrected image.

In addition, in a case in which the "processed thumbnail image" is received as the type of the thumbnail image that is the acquisition target in the type reception step (S012), the processor 11 carries out a decision step and a selection acquisition step in conjunction with the carried-out process correction step (S013 and S014).

In the decision step, the processor 11 specifies the correction content of the main image MP in the process correction step, and, specifically, specifies the correction amount (the degree of change in the main image MP caused by the correction) by comparing the main images MP before and after the correction. Then, the processor 11 decides whether or not to carry out the acquisition step of acquiring the processed thumbnail image based on the specified correction amount. Specifically, in a case in which the correction amount is equal to or greater than the reference value, the processor 11 decides to carry out the acquisition step of acquiring the processed thumbnail image.

In the selection acquisition step, the processor 11 displays the display screen shown in Fig. 7 on the display of the imaging device 20 and acquires the selection of the user regarding whether or not to acquire the processed thumbnail image. Then, in a case in which the user selects the acquisition of the processed thumbnail image, the processor 11 carries out the acquisition step of the processed thumbnail image in accordance with the selection.

It should be noted that, in the flow shown in Fig. 12B, both the decision step and the selection acquisition step are carried out, but the present invention is not limited to this, and only one of the decision step or the selection acquisition step may be carried out.

In a case in which the processed thumbnail image is acquired in accordance with the results obtained in the decision step and the selection acquisition step (S015), the processor 11 carries out the acquisition step (S016). In the acquisition step, the processed thumbnail image is generated by the function of the imaging device 20 based on the entirety or a part of the processed image. As a result, the processed thumbnail image is acquired, and the processed thumbnail image is stored in the image file as the accessory information of the main image MP. In addition, the acquired processed thumbnail image is the first thumbnail image, and is stored in the image file in an aspect in which the processed thumbnail image is not changed in conjunction with the change in the main image MP even in a case in which the main image MP is corrected afterwards.

It should be noted that, in the acquisition step, the second thumbnail image that is changed in conjunction with the change in the main image MP may be acquired along with the first thumbnail image as the processed thumbnail image.

The image file creation flow ends at a point in time at which a series of steps described above are completed. As described above, in the image file creation flow according to the first embodiment, the main image MP included in the image file is changed by the correction processing. In addition, in a case in which the correction processing is executed, the thumbnail image is acquired based on the type of the thumbnail image in a case in which the correction processing corresponds to the type of the thumbnail image received in advance. Specifically, the thumbnail image TP is generated based on the entirety or a part of the corrected main image MP.

Further, the thumbnail image TP acquired in the first embodiment includes at least the first thumbnail image. The first thumbnail image is not changed in conjunction with the conversion of the main image caused by the correction processing even in a case in which the correction processing is executed on the main image after the first thumbnail image is generated. Such a first thumbnail image can be used as evidence for proving what kind of image the main image before the correction is in a case in which the main image that is the original image is changed by the correction processing. That is, in the first embodiment, the thumbnail image having excellent credibility and high utility value can be acquired as the accessory information of the main image.

### [Second Embodiment]

An image file creation device 10X according to the second embodiment has a function of executing combining processing as the correction processing of the main image MP. In the combining processing, two or more images including the main image MP are combined to acquire a new main image MP. In the following description, an image before being combined will be referred to as a "base image".

In the second embodiment, a mode for reproducing multiple-exposure, a mode for super-resolution, a mode for a high dynamic range (HDR), and a mode for collage can be selected as a mode of the combining processing. That is, in the second embodiment, in a case in which a plurality of base images are combined to generate a composite image, the user selects any one mode from among a plurality of image generation modes, and the selection of the user is received. Hereinafter, each mode of the combining processing will be described.

### (Mode of Combining Processing for HDR)

In a mode of the combining processing for the HDR (hereinafter, a first mode), the plurality of base images having different imaging conditions of the imaging device 20 during the imaging are combined to generate the composite image. Here, the imaging condition is the exposure amount, and, in the first mode, the composite image is generated by combining the plurality of base images having different exposure amounts during the imaging.

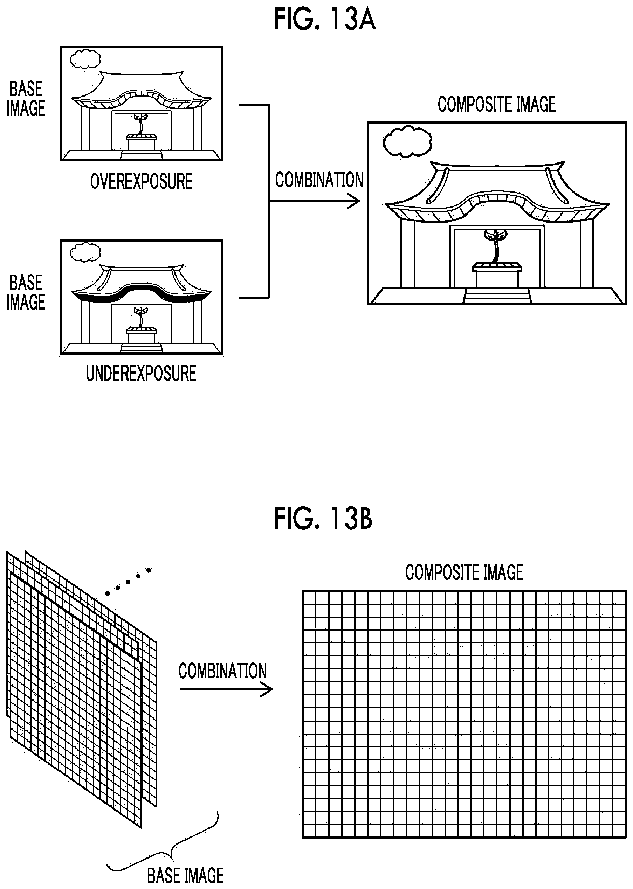

More specifically, one of the plurality of base images used in the first mode is an image captured with an exposure amount (overexposure) larger than a standard exposure amount (exposure amount set to an appropriate value at that point in time). The other base images are images captured with an exposure amount (underexposure) smaller than the standard exposure amount. Then, as shown in Fig. 13A, the base image with the overexposure and the base image with the underexposure are combined such that portions that are appropriately exposed in the respective base images are connected. The composite image obtained in this manner is an image in which bright portions and dark portions within the angle of view are appropriately expressed (that is, an image in which the overexposure and the underexposure are eliminated).

It should be noted that the present invention is not limited to a case in which, in the first mode, the plurality of base images having different exposure amounts are used, and a plurality of images having different imaging conditions other than the exposure amount, specifically, the ISO sensitivity, the focus position at the point in time of the imaging, and the focal length may be used as the base images.

### (Mode of Combining Processing for Super-Resolution)

In a mode of the combining processing for the super-resolution (hereinafter, a second mode), a plurality of base images captured by shifting the imaging position of the imaging element in the imaging device 20 by one pixel or half a pixel by using the pixel shift function of the imaging device 20 are combined. The composite image obtained in this manner has a higher resolution than the base image as shown in Fig. 13B. It should be noted that the time interval in a case of capturing the plurality of base images by using the pixel shift function is, for example, about 1/100 seconds. As a method of creating the composite image through the pixel shift, for example, methods disclosed in JP2020-096301A and JP2019-161564A are known.

(Mode of Combining Processing for Multiple-Exposure)

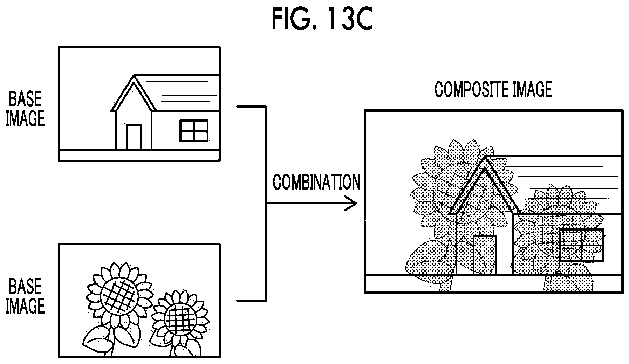

In a mode of the combining processing for the multiple-exposure (hereinafter, a third mode), the plurality of base images captured by the imaging device 20 at different locations are combined. For example, the remaining base images are superimposed on one of the plurality of base images in a state in which the transparency is set to be smaller than a normal value. The transparency is a degree of transparency of the background in a case in which the image is displayed, and can be freely adjusted in a range of 0% to 100% by the function of the imaging device 20. The composite image obtained in this manner is an image in which the subjects of the plurality of base images captured at different locations are collectively shown, as shown in Fig. 13C.

### (Mode of Combining Processing for Collage)

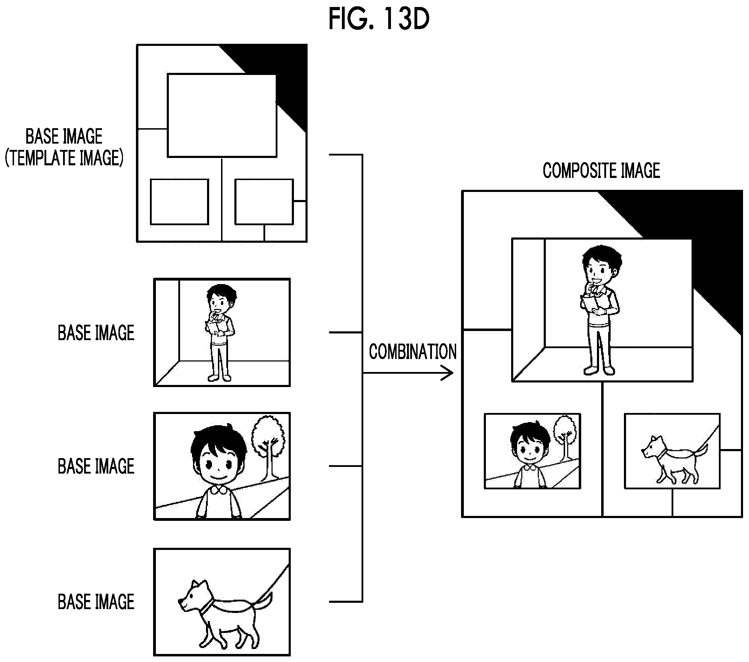

In a mode of the combining processing for the collage (hereinafter, a fourth mode), the plurality of base images are combined in an arranged manner. Specifically, as shown in Fig. 13D, the composite image is acquired by arranging the base images other than a template image that is the background of the composite image among the plurality of base images in accordance with the image layout defined in the template image. In the fourth mode, sizes of the base images other than the template image are enlarged or reduced as appropriate in accordance with a size of the template image. In addition, the plurality of base images used in the fourth mode may be images selected by the user or may be images automatically selected in a case in which the subject in the image satisfies a predetermined condition.

### (Image File of Composite Image)

In the second embodiment, in a case in which the composite image is generated by the combining processing, the image file is created in which the composite image is used as the main image MP. In header information of the image file, the accessory information related to the composite image that is the main image MP is stored. In addition, the accessory information includes the thumbnail image (accessory image).

In the second embodiment, the thumbnail image TP is created based on at least one of the plurality of base images used for the combining processing. Specifically, in a case in which the composite image is generated based on the image generation mode designated by the user, the thumbnail image TP is generated based on a portion or all of the plurality of base images used for the generation of the composite image in accordance with the image generation mode. As a result, it is possible to recognize, from the thumbnail image TP, the base image from which the composite image is generated, that is, the base image used as a material of the composite image.

It should be noted that the thumbnail image TP based on the base image may be generated after the execution of the combining processing or may be generated before the execution of the combining processing. In addition, the thumbnail image TP based on the composite image may be generated along with the thumbnail image TP based on the base image.

In addition, the thumbnail image generated in the second embodiment is an image that is not changed in conjunction with the change in the composite image in a case in which the composite image is changed by the color correction processing, the process correction processing, or the like. In a case in which such a thumbnail image is generated, it is possible to acquire the thumbnail image having excellent credibility and high utility value as the accessory information related to the composite image. However, the present invention is not limited to this, and, in the second embodiment, a correctable thumbnail image, that is, the thumbnail image (variable accessory image) that is changed in conjunction with the change in the composite image caused by the correction processing may be generated.

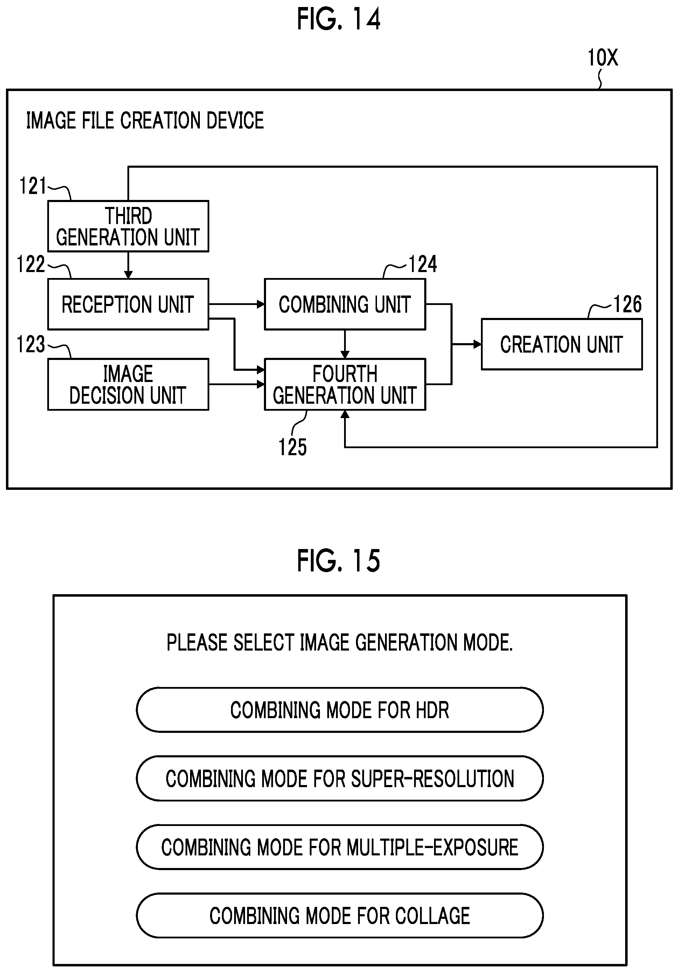

Next, functions of the image file creation device 10X according to the second embodiment will be described with reference to Fig. 14. A hardware configuration of the image file creation device 10X according to the second embodiment is the same as a hardware configuration of the first embodiment, and software such as the image file creation program is installed in the image file creation device 10X.

The image file creation device 10X according to the second embodiment includes, as shown in Fig. 14, a third generation unit 121, a reception unit 122, an image decision unit 123, a combining unit 124, a fourth generation unit 125, and a creation unit 126. These functional units are implemented by cooperation between a hardware device of the image file creation device 10X and software including the image file creation program. In addition, some functions may be implemented by using artificial intelligence (AI). Hereinafter, each of the functional units will be described.

### (Third Generation Unit)

The third generation unit 121 generates the base image used for the combining processing. Since a procedure of generating the base image is the same as a procedure of generating the developed image, the color-corrected image, or the processed image in the first embodiment, the description of the procedure of generating the base image will be omitted. In addition, the third generation unit 121 may add, to the base image, information (hereinafter, availability information) indicating whether or not the image is an image used for the generation of the thumbnail image. The availability information is stored as the accessory information in, for example, the image file of the base image.

### (Reception Unit)

In a case in which the plurality of base images are combined to generate the composite image, the reception unit 122 receives any image generation mode from among the plurality of image generation modes. Specifically, on a mode designation screen of Fig. 15, the first to fourth modes described above are displayed in a selectable manner. The user optionally designates any one mode from among these modes, and the reception unit 122 receives any image generation mode designated by the user. It should be noted that the image generation mode need only be received before the execution of the combining processing, and may be received, for example, immediately after the imaging device 20 is activated.

### (Image Decision Unit)

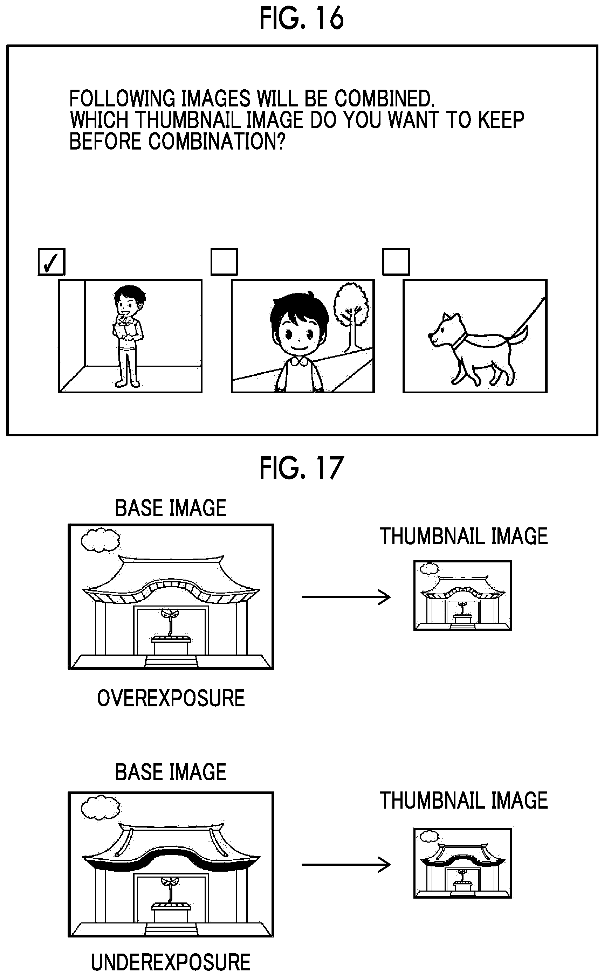

In a case in which the composite image is generated by combining the plurality of base images, the image decision unit 123 decides on the base image used for the generation of the thumbnail image from among the plurality of base images. The image decision unit 123 may decide on the base image used for the generation of the thumbnail image (hereinafter, referred to as a generation base image as necessary) by receiving the designation of the generation base image from the user, or the image decision unit 123 may automatically decide on the generation base image. In the former case, for example, on an image designation screen of Fig. 16, the plurality of base images used for the generation of the composite image are displayed so as to be designated. The user designates at least one of the plurality of base images, and the image decision unit 123 receives the designation of the generation base image performed by the user. It should be noted that the designation of the generation base image need only be received before the generation of the thumbnail image, and may be received, for example, immediately after the execution of the combining processing.

In a case in which the image decision unit 123 automatically decides on the generation base image, the generation base image may be decided on in advance corresponding to each mode. For example, in the first mode, it may be decided to use both the image with the overexposure and the image with the underexposure as the generation base images. In addition, in the second mode, it may be decided to use the first image in terms of time as the generation base image. In addition, in the third mode, it may be decided to use all the images that are the basis of the combination as the generation base images. In the fourth mode, as described later, it may be decided to use an image with a high score as a result of a subject analysis for the composite image as the generation base image.

### (Combining Unit)

The combining unit 124 executes the combining processing based on the image generation mode received by the reception unit 122, and combines the plurality of base images in the combining processing to generate the composite image. It should be noted that, in a case in which the combining processing is executed in the third mode or the fourth mode, the combining unit 124 receives the designation of the plurality of base images used for the combining processing from the user, and generates the composite image by using the plurality of designated base images.

### (Fourth Generation Unit)

The fourth generation unit 125 generates the thumbnail image as the accessory information of the composite image in conjunction with the combining processing. In the second embodiment, the fourth generation unit 125 generates the thumbnail image based on at least one of the plurality of base images in accordance with the image generation mode received by the reception unit 122.

Specifically, in a case in which the reception unit 122 receives the first mode, the fourth generation unit 125 generates one or more thumbnail images based on a portion or all of the plurality of generation base images. More specifically, the fourth generation unit 125 generates two or more thumbnail images based on at least two or more generation base images having different exposure amounts during the imaging, as shown in Fig. 17. The two or more generation base images from which the thumbnail image is generated may include, for example, a generation base image with the overexposure and a generation base image with the underexposure. In this case, from among the plurality of base images used in the first mode, an image having a large influence on the composite image, such as the image with the overexposure or the underexposure, is automatically selected. Then, the thumbnail image based on the plurality of selected generation base images can be generated.

It should be noted that the present invention is not limited to the above-described case, and the thumbnail image may be generated based on the generation base image of the standard exposure amount (that is, zero exposure). In addition, all of the plurality of base images may be used as the generation base image, and the thumbnail image based on each generation base image may be generated. In addition, the thumbnail image based on any one of the generation base image with the overexposure or the generation base image with the underexposure may be generated.

In addition, in a case in which the reception unit 122 receives the first mode, the fourth generation unit 125 may generate the thumbnail image based on each of the plurality of generation base images for each generation base image. In this case, it is possible to acquire the thumbnail image based on the generation base image for each of the plurality of generation base images involved in the generation of the composite image.

It should be noted that, in the configuration in which the thumbnail image is generated for each base image, the plurality of base images may include the base image from which the thumbnail image is not generated.

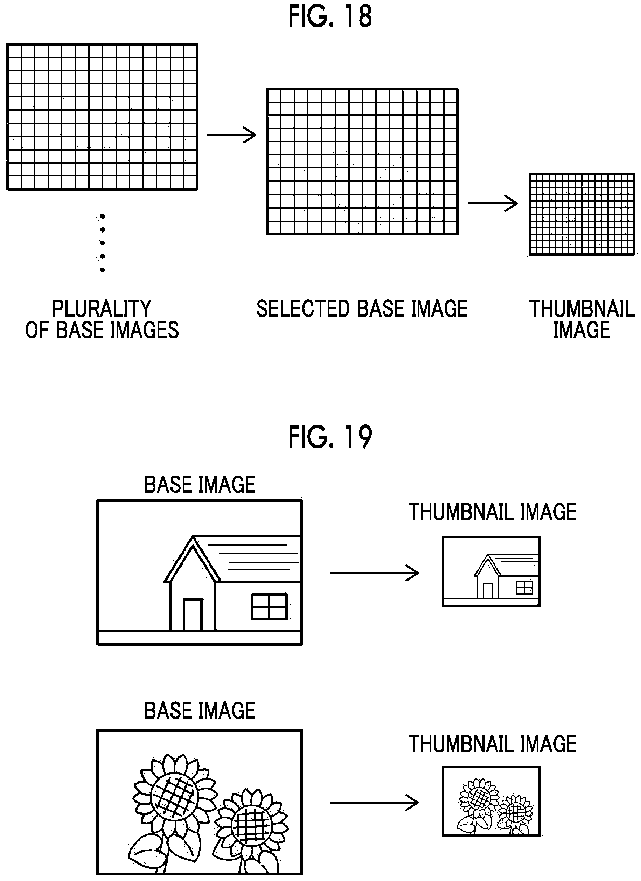

In a case in which the reception unit 122 receives the second mode, the fourth generation unit 125 generates the thumbnail image based on a portion of the plurality of base images. Specifically, as shown in Fig. 18, the fourth generation unit 125 generates the thumbnail image based only on a portion of the generation base images (for example, the first base image in terms of time) among the plurality of base images captured by shifting the imaging position by using the pixel shift. This is because, although the imaging position is shifted among the plurality of base images used in the second mode, most of the subjects in the images are common. That is, in a case in which the thumbnail image is generated based only on a portion of the base images in a case in which the combining processing is executed in the second mode, it is possible to appropriately recognize the base image used for the generation of the composite image.

In a case in which the reception unit 122 receives the third mode, the fourth generation unit 125 generates the thumbnail image based on all of the plurality of base images as shown in Fig. 19. That is, in a case in which the plurality of base images captured at different locations are combined, the fourth generation unit 125 generates the same number of thumbnail images as the number of base images based on each base image. This is because the subjects in the images are different since the imaging locations are different among the plurality of base images used in the third mode. Therefore, in a case in which the combining processing is executed in the third mode, the thumbnail image is generated based on all of the base images, so that it is possible to appropriately recognize the base image used for the generation of the composite image.

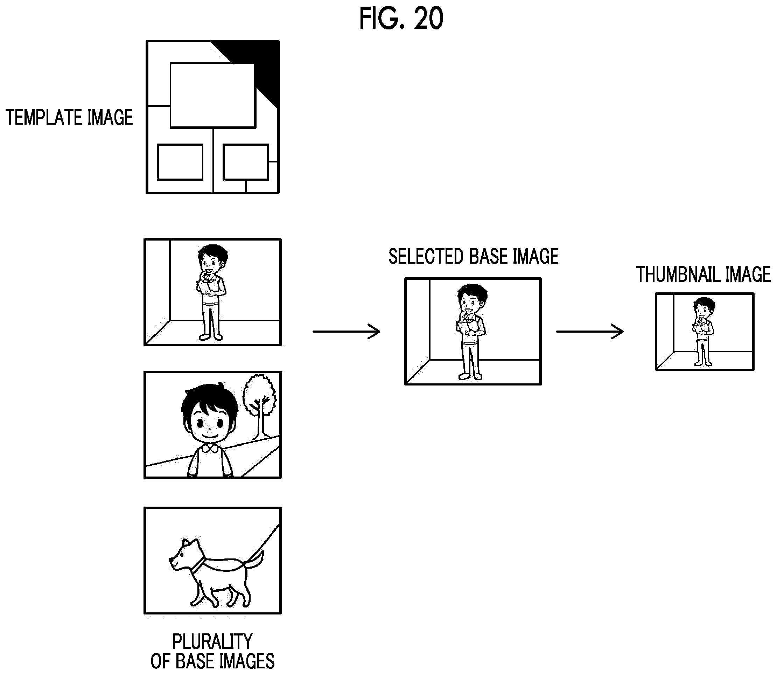

In a case in which the reception unit 122 receives the fourth mode, the fourth generation unit 125 may generate the thumbnail image based on a portion of the plurality of base images. Specifically, as shown in Fig. 20, the fourth generation unit 125 generates the thumbnail image based only on a portion of the generation base images among the plurality of base images arranged in a predetermined layout on the template image. Here, the base image from which the thumbnail image is generated may be, for example, the template image, that is, an image in which a disposition layout of the base image to be combined is known.

As another example in a case in which the reception unit 122 receives the fourth mode, the fourth generation unit 125 may select a portion of the plurality of base images (strictly speaking, an image other than the template image) from among the plurality of base images based on the sizes of the plurality of base images in the composite image. In such a case, the fourth generation unit 125 may generate the thumbnail image based on the selected base image. As a result, for example, the thumbnail image can be acquired for the base image having a large influence on the composite image, such as an image having a relatively large size in the composite image.

As another example in a case in which the reception unit 122 receives the fourth mode, the fourth generation unit 125 may calculate a score for each of the plurality of base images in the composite image. The score may be calculated based on the resolution perception such as the blurriness, the shake, or the like of the subject in the base image, the facial expression of the subject, the brightness (luminance) of each part of the subject, the size of the base image in the template image, and the like. Then, the fourth generation unit 125 may select a portion of the generation base images (strictly speaking, an image other than the template image) from among the plurality of base images based on the calculated scores, to generate the thumbnail image based on the selected generation base image. As a result, for example, the thumbnail image can be acquired for the base image having a large influence on the composite image, such as an image having a high score in the composite image.

In addition, in a case in which the reception unit 122 receives the fourth mode and the number of the plurality of base images used for the combining processing is equal to or less than a predetermined number, the fourth generation unit 125 may generate the thumbnail image based on all of the plurality of base images. It should be noted that the number of base images serving as a reference in a case of deciding whether or not to generate the thumbnail image based on all of the plurality of base images can be set to be any number.

In the second embodiment, the fourth generation unit 125 may generate the thumbnail image based on at least one of the plurality of base images and the thumbnail image based on the composite image. In a case in which the thumbnail image is generated for each of the images before and after the combination, it is possible to appropriately recognize which composite image is generated from which base image.

It should be noted that, depending on the image generation mode, it may be clear that the main image MP is the composite image, and in this case, the base image may not be required. In such a case, the thumbnail image (first thumbnail image) based on the composite image need only be generated, and the setting may be made such that the thumbnail image based on the base image is not generated.

In addition, in the second embodiment, the fourth generation unit 125 may generate the thumbnail image that is not changed in conjunction with the change in the composite image caused by the correction processing, as the thumbnail image. As a result, it is possible to acquire the thumbnail image that has excellent credibility as the accessory information related to the composite image and that has high utility value.

In addition, depending on the image generation mode received by the reception unit 122, the fourth generation unit 125 may generate the thumbnail image corresponding to the generation base image decided on by the image decision unit 123. For example, in a case in which the reception unit 122 receives the first mode or the second mode, the fourth generation unit 125 may generate the thumbnail image corresponding to the generation base image decided on by the image decision unit 123.

It should be noted that the thumbnail image corresponding to the generation base image is the thumbnail image formed by reducing the entirety or a part of the base image.

In addition, among the plurality of base images, the base image used for the generation of the thumbnail image may be decided on based on the availability information given to the base image. In this case, the fourth generation unit 125 may generate the thumbnail image based on the image selected based on the availability information from among the plurality of base images, that is, the generation base image used for the generation of the thumbnail image. The availability information is information attached to each of the base images, and is information related to whether or not to use the base image as the basis of the composite image as the generation base image that is the basis of the thumbnail image. As a result, it is possible to appropriately decide whether or not to generate the thumbnail image based on the availability information added to the base image, and it is possible to generate the thumbnail image to be generated.

### (Creation Unit)

In the second embodiment, the creation unit 126 creates the image file of the composite image. The image file includes the composite image as the main image MP and the accessory information related to the composite image, and the accessory information includes the thumbnail image TP generated by the fourth generation unit 125.

### (Operation Example of Image File Creation Device According to Second Embodiment)

Next, an image file creation flow using the image file creation device 10X in the second embodiment will be described. In the image file creation flow described later, an image file creation method according to the second embodiment is used.

It should be noted that the following flow is merely an example, and some steps in the flow may be deleted, new steps may be added to the flow, or the execution order of two steps in the flow may be interchanged within a range not departing from the gist of the present embodiment.

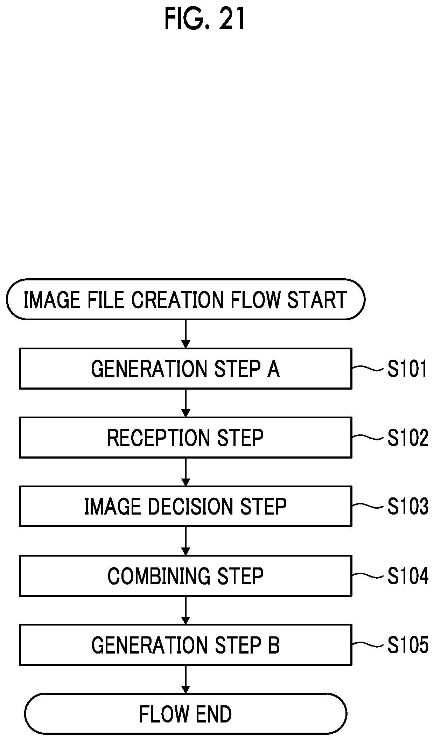

Each step in the image file creation flow according to the second embodiment is carried out by the processor 11 provided in the image file creation device 10X in an order shown in Fig. 21. That is, the processor 11 executes, in each step in the image file creation flow, processing corresponding to each step among pieces of the data processing defined by the image file creation program. In addition, the image file creation flow according to the second embodiment is a processing flow in a case in which the composite image is generated by combining the plurality of base images.

In the image file creation flow according to the second embodiment, first, the processor 11 carries out a generation step A (S101). In the generation step A, the base image to be used in a later combining step is generated. In addition, the generation step A is generally carried out a plurality of times, and, during the generation step A, the imaging conditions (specifically, the exposure amounts), the imaging locations, the imaging positions of the imaging elements, and the like during the imaging may be different.

Next, the processor 11 carries out the reception step (S102). In the reception step, the processor 11 displays the mode designation screen shown in Fig. 15 on the display of the imaging device 20, and receives any image generation mode designated by the user from among the plurality of image generation modes. It should be noted that the reception step need only be carried out before the combining step is carried out, and, for example, may be carried out after the imaging device 20 is activated.

Next, the processor 11 carries out an image decision step, and, in this step, decides on the generation base image used for the generation of the thumbnail image from among the plurality of base images to be combined (S103). It should be noted that, depending on the image generation mode received in the reception step, the image decision step may be omitted.

Thereafter, the processor 11 carries out the combining step (S104). In the combining step, the processor 11 executes the combining processing corresponding to the image generation mode received in the reception step, to combine the plurality of base images and generate the composite image. Then, the processor 11 sets the composite image as the main image MP and creates the image file including the main image MP in conjunction with the generation of the composite image.

Next, the processor 11 carries out a generation step B (S105). In the generation step B, the processor 11 generates the thumbnail image TP based on at least one of the plurality of base images used in the combining step in accordance with the image generation mode received in the reception step.

Specifically, in a case in which the first mode (combining mode for the HDR) is received in the reception step, in the generation step B, the processor 11 may generate one or more thumbnail images based on a portion of the plurality of base images. More specifically, in the generation step B, the processor 11 may generate two or more thumbnail images based on at least two or more of the plurality of base images having different exposure amounts during the imaging. In this case, it is preferable to generate the thumbnail image corresponding to each of the base images based on each of the base images with the overexposure and the base images with the underexposure (see Fig. 17).

As another example in a case in which the first mode is received in the reception step, in the generation step B, the processor 11 may generate the thumbnail image based on all of the plurality of images. Specifically, in the generation step B, the processor 11 may generate the thumbnail image based on each of the plurality of base images for each base image.

In a case in which the second mode (combining mode for the super-resolution) is received in the reception step, in the generation step B, the processor 11 may generate the thumbnail image based only on a portion of the plurality of base images (see Fig. 18). In this case, the processor 11 may generate the thumbnail image corresponding to the generation base image decided on in accordance with the designation of the user received in the image decision step.

In a case in which the third mode (combining mode for the multiple-exposure) is received in the reception step, in the generation step B, the processor 11 may generate the thumbnail image based on all of the plurality of base images (see Fig. 19).

In a case in which the fourth mode (combining mode for the collage) is received in the reception step, in the generation step B, the processor 11 may generate the thumbnail image based only on a portion of the plurality of base images (see Fig. 20). In this case, the processor 11 may generate the thumbnail image corresponding to the generation base image decided on in accordance with the designation of the user received in the image decision step.

Alternatively, the processor 11 may generate the thumbnail image based on the generation base image selected based on the availability information from among the plurality of base images with reference to the availability information given to each base image.

Alternatively, the processor 11 may automatically select a portion of the generation base images from among the plurality of base images based on the size of each of the plurality of base images in the composite image, and may generate the thumbnail image based on the selected generation base image.

Alternatively, the processor 11 may calculate the score in accordance with the resolution or the like of the subject in the base image for each of the plurality of base images, to generate the thumbnail image based on a portion of the generation base images automatically selected from among the plurality of base images based on the score.

The thumbnail image TP generated in the generation step B is stored in the image file of the composite image, as the accessory information of the composite image.

In addition, the thumbnail image may be an image that is not changed in conjunction with the conversion of the composite image caused by the correction processing even in a case in which the correction processing is executed on the composite image after the generation of the thumbnail image. The thumbnail image in this case is an image having high utility value and excellent credibility as evidence for proving which base image is used for the generation of the composite image.

In addition, in the generation step B, the processor 11 may generate the thumbnail image based on the composite image along with the thumbnail image based on at least one of the plurality of base images. In this case, since the thumbnail image is generated for each of the images before and after the combination, it is possible to appropriately recognize which composite image is generated from which base image.

The image file creation flow according to the second embodiment ends at a point in time at which a series of steps described above are completed. As described above, in the image file creation flow according to the second embodiment, the thumbnail image is generated based on the base image used for the combining processing. As a result, it is possible to accurately understand the base image used for the combining processing from the generated thumbnail image.

In addition, in the second embodiment, the thumbnail image is generated based on at least one of the plurality of base images in accordance with the image generation mode received in the reception step. As a result, it is possible to appropriately generate the thumbnail image based on the base image in accordance with the combining processing. Specifically, from among the plurality of base images, an image to be used as the original image of the thumbnail image can be appropriately selected in accordance with the type of the combining processing, and the thumbnail image can be generated based on the selected base image.

### [Third Embodiment]

As in the above-described embodiments, an image file creation device 10Y according to the third embodiment creates the image file including the main image MP and the thumbnail image TP as the accessory information related to the main image MP. In addition, the image file creation device 10Y has a function of analyzing the subject of the main image MP, deciding on a generation condition of the thumbnail image in accordance with an analysis result, and generating the thumbnail image based on the decided-on condition.

Specifically, in the third embodiment, the image file creation device 10Y analyzes the main subject among the subjects of the main image MP, and, specifically, analyzes the type, the size, or the resolution perception of the main subject to quantitatively specify the type, the size, or the resolution perception. The type is the classification (category) of the main subject. The size is a size of the region in which the main subject is present in the main image MP. The resolution perception is an indicator of the clarity of the main subject in the main image MP, and is, specifically, the degree of blurriness or shake. As a method of specifying these, a known subject detection technique, a known subject recognition technique, a known image analysis technique, or the like can be used.

In addition, in a case in which a plurality of subjects are present in the main image MP, the main subject is selected from among the plurality of subjects based on one or more of the following conditions i1 to i5.
i1: Focus position (AF point) of imaging device 20 in main image MP
i2: Visual line position of user in main image MP detected by finder provided in imaging device 20
i3: Feature of each subject in main image MP
i4: Degree of change in subject between live view image captured earlier in time than main image MP and main image MP
i5: Type of subject designated by user

In a case in which the main subject is selected based on the conditions i1 and i2, for example, among the plurality of subjects, a subject at a position closest to the visual line position detected by the AF point or the finder of the imaging device 20 can be set as the main subject.

The feature of the subject as the condition i3 corresponds to, for example, the resolution perception such as the degree of blurriness or shake of the subject in the main image MP, the image quality such as the sharpness, or the facial expression of the subject. In a case in which the main subject is selected based on the condition i3, for example, a subject in which the degree of blurriness or shake is suppressed to be less than a standard value, a subject in which the facial expression is a smile, or the like can be set as the main subject.

The degree of change in the subject as the condition i4 is the change amount (degree of change) of the position or the state of the subject in a period from a point in time of the capturing of the live view image to a point in time of the capturing of the main image MP. In a case in which the main subject is selected based on the condition i4, for example, a subject of which the change amount in the position or the state is equal to or greater than a predetermined amount can be set as the main subject.

In a case in which the main subject is selected based on the condition i5, a subject corresponding to the type designated by the user can be set as the main subject.

It should be noted that, in the third embodiment, the main image MP that is an analysis target includes the RAW image before the development. In addition, the image that is the analysis target is not limited to the main image MP, and may be an image captured earlier in time than the capturing of the main image MP, that is, the live view image. Since the live view image is an image similar to the main image MP, substantially the same analysis result can be acquired between the live view image and the main image MP.

In the third embodiment, the image file creation device 10Y decides on the factor of the image quality of the thumbnail image or the angle of view of the thumbnail image based on the analysis result related to the main subject. The factor of the image quality is an indicator for determining the image quality of the thumbnail image, and includes, for example, a quantified factor such as the resolution, the number of colors, the number of gradations, the dynamic range, and the color gamut. Then, the image file creation device 10Y generates the thumbnail image TP based on the decided-on factor of the image quality or the decided-on angle of view.

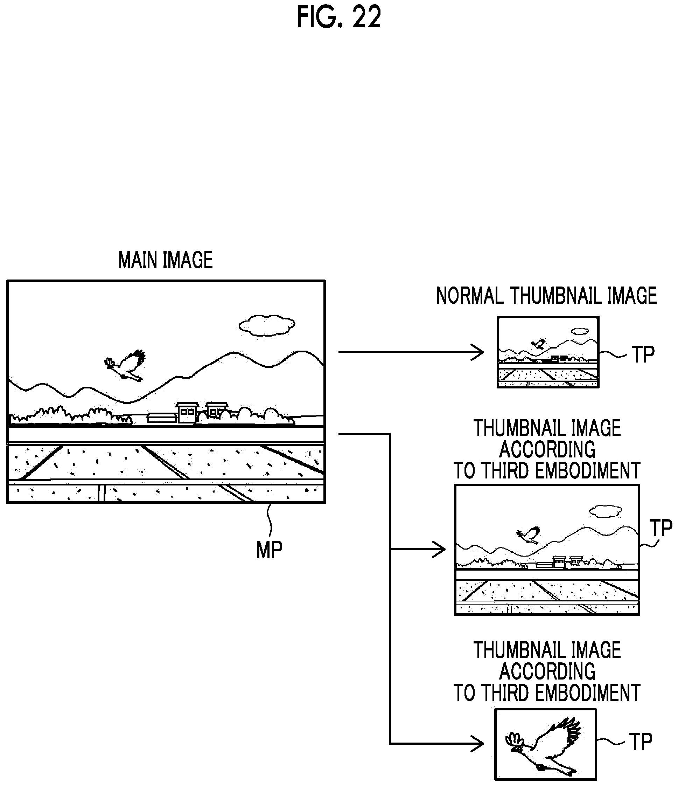

As described above, in the third embodiment, the utility value of the thumbnail image can be improved. In this regard, the normal thumbnail image TP is formed by reducing the entire main image MP, which is the original image, to a size of a general thumbnail image (for example, 400 × 320 pixels) with reference to Fig. 22. Here, in a case in which the subject is relatively small in the main image MP, and the thumbnail image TP of the main image MP is created in the above-described manner, the subject in the thumbnail image TP is significantly small as shown in Fig. 22, and it is difficult to identify the subject.

Meanwhile, in the third embodiment, the factor of the image quality or the angle of view of the thumbnail image TP is decided on in accordance with the type, the size, or the resolution of the subject in the main image MP. Then, as shown in Fig. 22, the thumbnail image TP is generated based on the decided-on factor or the decided-on angle of view. Specifically, the thumbnail image TP is generated such that the resolution, the number of gradations, or the like of the thumbnail image TP is equal to or greater than a predetermined value (value of the general thumbnail image). For example, the thumbnail image TP is generated with the resolution of 1200 × 960 pixels. Alternatively, as shown in Fig. 22, the subject region is extracted (trimmed) from the main image MP based on the decided-on angle of view, and the thumbnail image TP is generated based on the extracted subject region.

In the third embodiment, the thumbnail image TP can be generated such that the subject region in the thumbnail image TP becomes clearer. As a result, the utility value of the thumbnail image TP can be enhanced, and, specifically, the subject in the thumbnail image TP can be recognized well and clearly.

An example of the use of the thumbnail image TP acquired in the third embodiment is, for example, to create training data for machine learning (AI learning) using the thumbnail image. The thumbnail image TP acquired in the third embodiment is an effective image as the training data since the clarity of the subject is higher than the clarity of the normal thumbnail image.

In addition, the thumbnail image TP generated in the third embodiment may be an image that is not changed in conjunction with the change in the main image MP caused by the correction processing. Such a thumbnail image TP is an image having high credibility as evidence for proving what kind of image the main image MP is at the point in time of the generation. Therefore, even in a case in which the correction such as the tampering is executed on the main image MP, the execution of the correction can be recognized by referring to the thumbnail image TP.

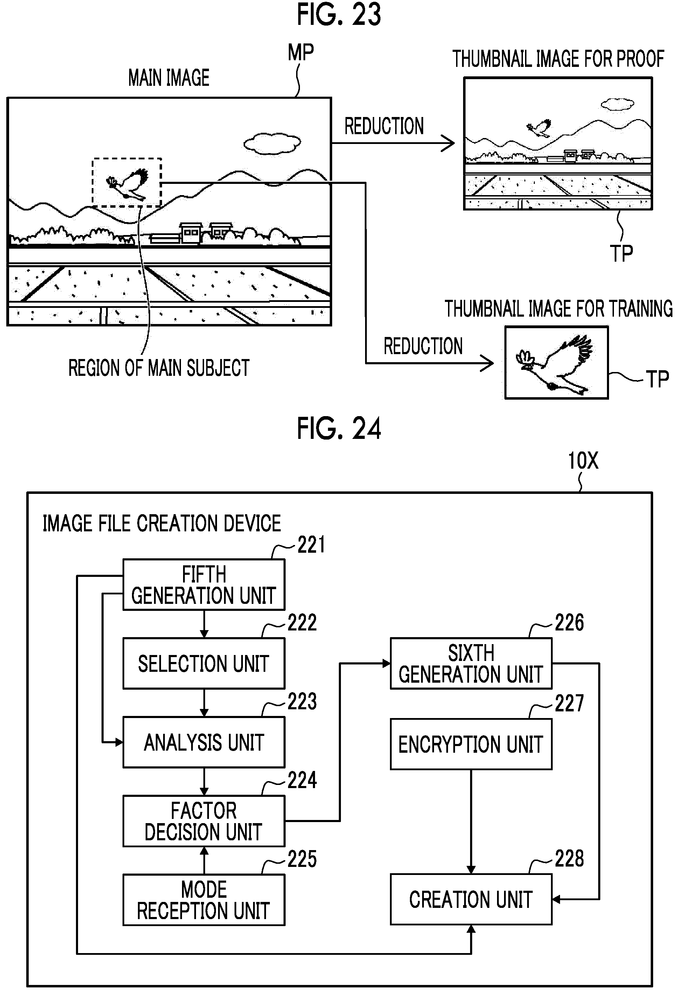

In the third embodiment, two types of thumbnail images shown in Fig. 23 can be generated as the thumbnail images TP based on the main image MP. The first thumbnail image is the thumbnail image TP based on the entire main image MP, and is, specifically, the image obtained by reducing the entire main image MP as shown in Fig. 23. In the following description, the first thumbnail image will be referred to as a "thumbnail image for proof". The thumbnail image for proof is mainly used as evidence for proving what kind of image the main image MP before the correction is in a case in which the correction processing is executed on the main image MP.

The second thumbnail image is the thumbnail image TP based on the region of the main subject in the main image MP, and is, specifically, the image obtained by reducing the region of the main subject extracted (trimmed) from the main image MP as shown in Fig. 23. In the following description, the second thumbnail image will be referred to as a "thumbnail image for training". The thumbnail image for training is mainly used to create the training data for machine learning (AI learning). However, the present invention is not limited to this, and the thumbnail image (thumbnail image for proof) obtained by reducing the entire main image MP may be used to create the training data for machine learning.

Next, functions of the image file creation device 10Y according to the third embodiment will be described with reference to Fig. 24. It should be noted that a hardware configuration of the image file creation device 10Y according to the third embodiment is the same as the hardware configuration of the first embodiment, and software such as the image file creation program is installed in the image file creation device 10Y.

As shown in Fig. 24, the image file creation device 10Y according to the third embodiment includes a fifth generation unit 221, a selection unit 222, an analysis unit 223, a factor-and-other-elements decision unit 224, a mode reception unit 225, a sixth generation unit 226, an encryption unit 227, and a creation unit 228. These functional units are implemented by cooperation between a hardware device of the image file creation device 10Y and software including the image file creation program. In addition, some functions may be implemented by using artificial intelligence (AI). Hereinafter, each of the functional units will be described.

### (Fifth Generation Unit)

The fifth generation unit 221 generates the main image MP. Since a procedure of generating the main image MP in the third embodiment is the same as the procedure of generating the main image MP (the developed image, the color-corrected image, or the processed image) in the first embodiment, the description thereof will be omitted.

### (Selection Unit)

In a case in which the plurality of subjects are present in the main image MP, the selection unit 222 selects the main subject from among the plurality of subjects. Specifically, in a case in which the user has not designated the type of the main subject, the selection unit 222 selects the main subject based on one or more of the condition i1, the condition i2, the condition i3, or the condition i4. The conditions i1 to i4 are contents that can be specified by analyzing the main image MP. Therefore, it is possible to automatically select the main subject from among the plurality of subjects based on at least one condition of the condition i1, the condition i2, the condition i3, or the condition i4.

On the other hand, in a case in which the type of the main subject is designated by the user, the selection unit 222 selects the main subject based on one or more of the condition i1, the condition i2, the condition i3, or the condition i4, and the type designated by the user (that is, the condition i5). In a case in which the user designates the type for the main subject in this way, the selection unit 222 selects the main subject from among the plurality of subjects in accordance with the designated type.

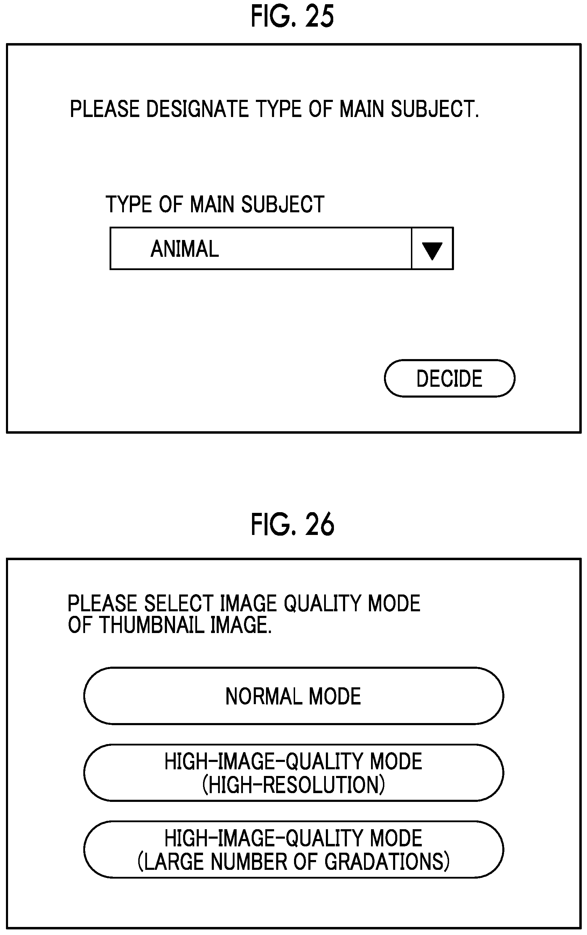

It should be noted that, in a case in which the user designates the type of the main subject, for example, a type designation screen shown in Fig. 25 may be displayed on the display of the imaging device 20. In this case, the user designates (inputs) the type of the subject through the type designation screen, so that the designation of the type is received.

### (Analysis Unit)

The analysis unit 223 executes analysis processing on the main image MP. In the analysis processing, the type, the size, or the resolution perception of the subject of the main image MP is analyzed. In addition, in a case in which the selection unit 222 selects the main subject, in the analysis processing, the type, the size, or the resolution perception of the selected main subject is analyzed.

It should be noted that a target of the analysis processing is not limited to the subject of the main image MP, and may be the subject of the live view image captured earlier in time than the capturing of the main image MP.

### (Factor-and-Other-Elements Decision Unit)

The factor-and-other-elements decision unit 224 executes decision processing and decides on, in the decision processing, the factor of the image quality of the thumbnail image TP or the angle of view (hereinafter, the factor and other elements) of the thumbnail image TP based on the analysis result obtained by the analysis unit 223. Specifically, the factor-and-other-elements decision unit 224 decides on the resolution of the thumbnail image TP based on, for example, the size of the main subject analyzed by the analysis unit 223. More specifically, the factor-and-other-elements decision unit 224 decides on the resolution of the thumbnail image such that the spatial frequency of the region of the main subject in the thumbnail image TP is equal to or greater than a predetermined value. As a result, it is possible to generate the thumbnail image TP while sufficiently ensuring the clarity of the main subject in the thumbnail image in a case in which the thumbnail image TP is generated.

It should be noted that the predetermined value related to the spatial frequency may be a value set in advance as an initial value or may be a value that can be optionally set and changed by the user.

In addition, in a case in which the size of the main subject analyzed by the analysis unit 223 is smaller than a predetermined size, in the decision processing, the resolution or the number of gradations of the thumbnail image TP may be increased as compared to a case in which the size of the main subject is equal to or larger than the predetermined size. Alternatively, in a case in which the size of the main subject is smaller than the predetermined size, the angle of view of the thumbnail image TP may be set to be smaller in the decision processing than in a case in which the size of the main subject is equal to or larger than the predetermined size. Specifically, the angle of view of the thumbnail image TP may be set to be limited to the region of the main subject in the main image MP.

As described above, the resolution, the number of gradations, or the angle of view of the thumbnail image can be decided on such that the main subject in the thumbnail image becomes clearer and more easily recognized.

It should be noted that the thumbnail image TP generated based on the resolution, the number of gradations, or the angle of view decided on as described above can be effectively used to create the training data for machine learning.

### (Mode Reception Unit)

The mode reception unit 225 receives selection of a high-image-quality mode in a case in which the user selects the high-image-quality mode. The high-image-quality mode is a mode in which the factor of the image quality of the thumbnail image TP including the main subject, specifically, the resolution or the number of gradations is increased as compared to that in a normal mode. For example, in a case in which the user acquires a high-image quality thumbnail image for the purpose of creating the training data for machine learning, the user can select the high-image-quality mode. The selection of the high-image-quality mode by the user may be received by displaying a mode selection screen shown in Fig. 26 on the display of the imaging device 20.

It should be noted that a timing at which the selection of the high-image-quality mode is received is not particularly limited as long as the timing is before the generation of the thumbnail image TP, and, for example, the mode selection may be received immediately after the main image MP (specifically, the developed image) is captured.

In a case in which the mode reception unit 225 receives the selection of the high-image-quality mode, the factor-and-other-elements decision unit 224 decides on the resolution or the number of gradations of the thumbnail image based on the selected high-image-quality mode and the analysis result obtained by the analysis unit 223. Accordingly, in a case in which the user selects the high-image-quality mode, it is possible to decide on the factor of the image quality of the thumbnail image TP by reflecting the intention of the user who desires the high-image quality thumbnail image.

### (Sixth Generation Unit)

The sixth generation unit 226 executes thumbnail generation processing to generate the thumbnail image TP based on the main image MP. In the thumbnail generation processing, the sixth generation unit 226 generates the thumbnail image TP based on the main image MP based on the factor and other elements decided on by the factor-and-other-elements decision unit 224. In addition, in the third embodiment, the sixth generation unit 226 generates the thumbnail image for proof and the thumbnail image for training, as the thumbnail images, based on the main image MP.

It should be noted that the user may be able to optionally designate whether to generate the thumbnail image for proof, the thumbnail image for training, or both the thumbnail image for proof and the thumbnail image for training. In addition, in a case in which the thumbnail image for training is generated, the resolution or the number of gradations of the thumbnail image for training may be changeable in accordance with the input operation of the user.

In addition, in a case in which the mode reception unit 225 receives the selection of the high-image-quality mode, the sixth generation unit 226 may generate the thumbnail image TP, that is, the thumbnail image for training based on the region of the main subject in the main image MP. In this case, the thumbnail image TP is generated with the resolution or the number of gradations decided on by the factor-and-other-elements decision unit 224. Accordingly, it is possible to generate the thumbnail image TP such that the main subject becomes clearer by reflecting the intention of the user who selects the high-image-quality mode.

It should be noted that, in a case in which the mode reception unit 225 receives the selection of the high-image-quality mode, the thumbnail image TP, that is, the thumbnail image for proof may be generated with the resolution or the number of gradations decided on by the factor-and-other-elements decision unit 224 based on the entire main image MP.

In addition, in the third embodiment, the sixth generation unit 226 may generate the thumbnail image that is not changed in conjunction with the change in the main image MP caused by the correction processing, as the thumbnail image TP. However, the present invention is not limited to the above-described case, and the sixth generation unit 226 may generate the thumbnail image (variable accessory image) that is changed in conjunction with the change in the main image MP caused by the correction processing.

### (Encryption Unit)

The encryption unit 227 acquires information obtained by encrypting the thumbnail image TP generated by the sixth generation unit 226. Specifically, in a case in which the thumbnail image for proof is generated as the thumbnail image, the encryption unit 227 acquires information obtained by encrypting the thumbnail image for proof. In addition, in a case in which the thumbnail image for training is generated as the thumbnail image, the encryption unit 227 acquires information obtained by encrypting the thumbnail image for training. The information obtained by encrypting the thumbnail image is, for example, a hash value obtained by hashing the thumbnail image TP.

The information acquired by the encryption unit 227 is stored in the image file as the accessory information related to the main image MP. By storing the information obtained by encrypting the thumbnail image TP in the image file in this way, it is possible to detect that the thumbnail image TP has been tampered with. For example, in a case in which a third party has tampered with the thumbnail image TP, a hash value Ha of the thumbnail image before the tampering stored in advance and a hash value Hb obtained by hashing the thumbnail image after the tampering are compared to each other. In this case, since the hash value Ha is a value different from the hash value Hb, it is possible to detect that the thumbnail image TP has been tampered with.

It should be noted that the encrypted information may be information in which the hash value is further encrypted by a secret key. In addition, in the thumbnail image TP, at least the region of the main subject need only be encrypted, and the other regions need not be encrypted (in other words, may be tampered with).

### (Creation Unit)

The creation unit 228 creates the image file including the main image MP generated by the fifth generation unit 221. In addition, the image file includes the accessory information related to the main image MP. The thumbnail image TP generated by the sixth generation unit 226 and the information acquired by the encryption unit 227 are included in the accessory information.

### (Operation Example of Image File Creation Device According to Third Embodiment)

Next, an image file creation flow using the image file creation device 10Y in the third embodiment will be described. In the image file creation flow described later, an image file creation method according to the third embodiment is used.

It should be noted that the following flow is merely an example, and some steps in the flow may be deleted, new steps may be added to the flow, or the execution order of two steps in the flow may be interchanged within a range not departing from the gist of the present embodiment.

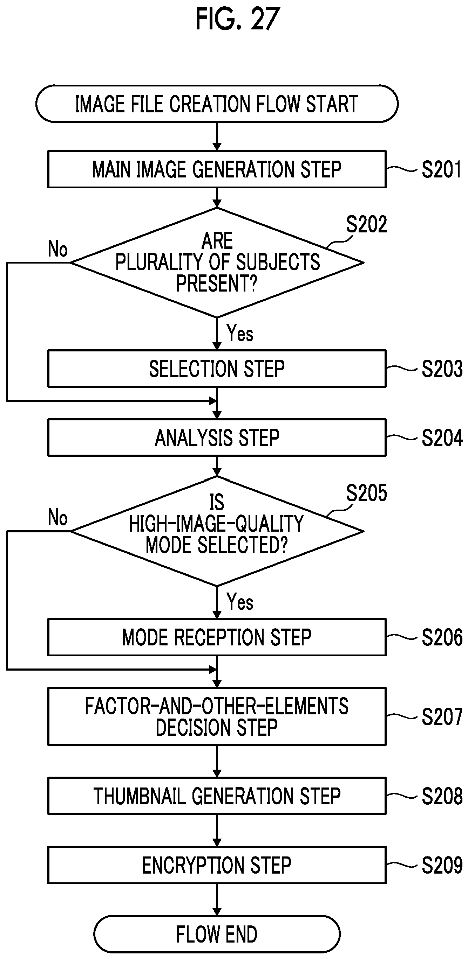

Each step in the image file creation flow according to the third embodiment is carried out by the processor 11 provided in the image file creation device 10Y in an order shown in Fig. 27. That is, the processor 11 executes, in each step in the image file creation flow, processing corresponding to each step among pieces of the data processing defined by the image file creation program.

In the image file creation flow according to the third embodiment, first, the processor 11 carries out a main image generation step (S201). In the main image generation step, the main image MP is generated in the same procedure as in the first embodiment. In addition, the image file of the main image MP is created in conjunction with the generation of the main image MP. In addition, the main image MP is appropriately subjected to the correction processing (development correction processing, color correction processing, and process correction processing). The main image MP in the image file is changed in conjunction with the execution of the correction processing.

Next, the processor 11 detects the subject in the main image MP, and carries out, in a case in which the plurality of subjects are present in the main image MP, a selection step before a subsequent analysis step is carried out (S202 and S203). In the selection step, the processor 11 selects the main subject from among the plurality of subjects. More specifically, in a case in which the user has not designated the type of the main subject, the processor 11 selects the main subject based on one or more of the condition i1, the condition i2, the condition i3, or the condition i4. On the other hand, in a case in which the user designates the type of the main subject through the type designation screen shown in Fig. 25, the processor 11 selects the main subject based on one or more of the condition i1, the condition i2, the condition i3, or the condition i4 and the type designated by the user (that is, the condition i5).

Next, the processor 11 carries out the analysis step to analyze the type, the size, or the resolution perception of the main subject of the main image MP (S204). The analysis step is not limited to a case of analyzing the main subject of the main image MP, and the main subject of the live view image captured earlier in time than the capturing of the main image may be analyzed.

After the analysis step is carried out, a factor-and-other-elements decision step is carried out (S207), but, in a case in which the user selects the high-image-quality mode, a mode reception step is carried out at a stage before the factor-and-other-elements decision step is carried out (S205 and S206).

In the factor-and-other-elements decision step, the processor 11 decides on the factor and other elements of the image quality of the thumbnail image generated in a subsequent thumbnail generation step based on the analysis result obtained in the analysis step. Specifically, in the factor-and-other-elements decision step, the processor 11 decides on the resolution of the thumbnail image TP such that the spatial frequency of the region of the main subject in the thumbnail image is equal to or greater than the predetermined value.

In addition, in a case in which the size of the main subject analyzed in the analysis step is smaller than a predetermined size, in the factor-and-other-elements decision step, the resolution or the number of gradations of the thumbnail image may be increased as compared to a case in which the size of the main subject is equal to or larger than the predetermined size. Alternatively, in a case in which the size of the main subject is smaller than the predetermined size, the angle of view of the thumbnail image may be smaller than in a case in which the size of the main subject is equal to or larger than the predetermined size.

In addition, in a case in which the high-image-quality mode is selected by the user, in the factor-and-other-elements decision step, the resolution or the number of gradations of the thumbnail image may be decided on based on the selected high-image-quality mode and the analysis result obtained in the analysis step.

Next, the processor 11 carries out the thumbnail generation step (S208). In the thumbnail generation step, the processor 11 generates the thumbnail image TP based on the factor and other elements decided on in the factor-and-other-elements decision step. For example, in a case in which the size of the main subject in the main image MP is smaller than the predetermined size, the processor 11 generates the thumbnail image TP with a higher resolution or a higher number of gradations than in a case in which the size of the main subject in the main image MP is equal to or larger than the predetermined size. Alternatively, the processor 11 generates the thumbnail image TP with a smaller angle of view than in a case in which the size of the main subject in the main image MP is equal to or larger than the predetermined size, specifically, with the angle of view limited to the region of the main subject.

In addition, in the thumbnail generation step, the processor 11 generates the thumbnail image TP that is not changed in conjunction with the change in the main image MP caused by the correction processing. In addition, in the thumbnail generation step, the processor 11 may generate the thumbnail image for proof and the thumbnail image for training based on the factor and other elements decided on in the decision step. For example, in a case in which the user selects the high-image-quality mode, the thumbnail image for training may be generated.

Next, the processor 11 carries out an encryption step (S209). In the encryption step, the processor 11 acquires the information obtained by encrypting the thumbnail image TP generated in the thumbnail generation step, specifically, the thumbnail image for proof or the thumbnail image for training. Specifically, the processor 11 acquires the hash value obtained by hashing the thumbnail image TP. The thumbnail image TP generated in the thumbnail generation step and the information acquired in the encryption step are stored in the image file as the accessory information of the main image MP.

The image file creation flow according to the third embodiment ends at a point in time at which a series of steps described above are completed. As described above, in the image file creation flow of the third embodiment, the type, the size, or the resolution perception of the subject (strictly speaking, the main subject) of the main image MP is analyzed. Then, the analysis result is reflected in the factor of the image quality of the thumbnail image TP based on the main image MP or the angle of view. Accordingly, it is possible to appropriately generate the thumbnail image TP based on the main image MP in consideration of the type, the size, or the resolution perception of the main subject of the main image MP.

Specifically, the thumbnail image TP can be generated while ensuring the clarity of the main subject in the thumbnail image TP. As a result, it is possible to acquire the thumbnail image TP with an improved utility value. In particular, since the main subject in the thumbnail image TP becomes clearer, the thumbnail image TP can be effectively used as, for example, data for creating the training data for machine learning for the purpose of image recognition.

### [Fourth Embodiment]

As in the above-described embodiments, an image file creation device 10Z according to the fourth embodiment creates the image file including the main image MP and the thumbnail image TP as the accessory information related to the main image MP. In the fourth embodiment, the main image MP is an image generated by pressing the release button of the imaging device 20. In addition, the image file creation device 10Z has a function of generating the plurality of thumbnail images TP based on the main image MP and the image (specifically, the live view image or the rec view image) captured before or after the capturing of the main image MP.

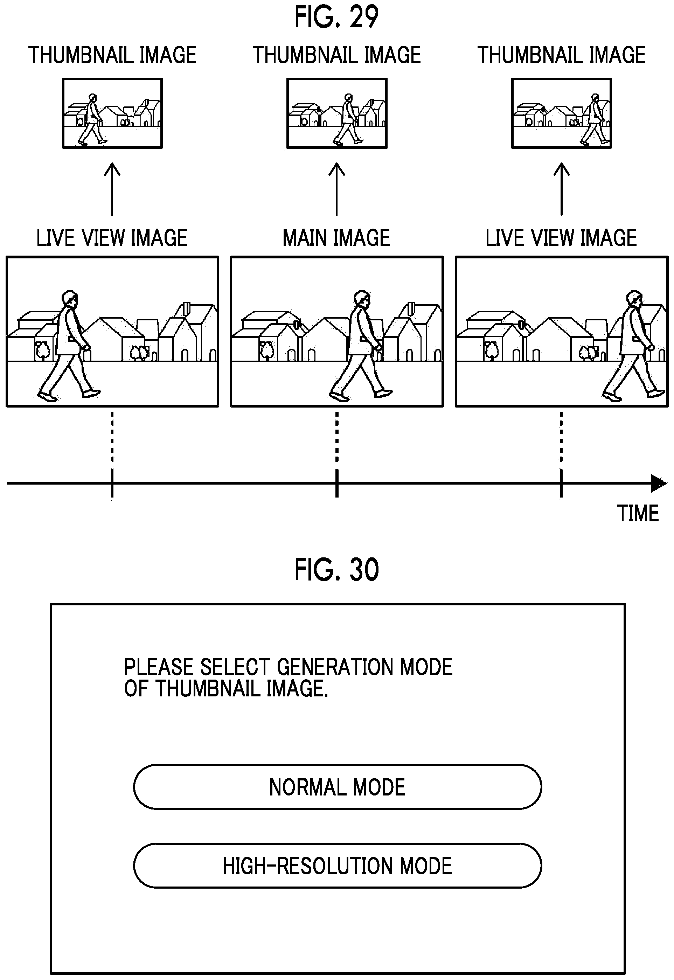

Specifically, in the fourth embodiment, the thumbnail image TP based on the main image MP is generated, and the thumbnail image TP is generated based on at least one of the live view image or the rec view image (see Fig. 29). Accordingly, the thumbnail image TP can be generated based on the image captured earlier or later in time than the capturing of the main image MP, and the thumbnail image TP can be stored in the image file.

In the following description, the thumbnail image TP generated based on the main image MP will be referred to as a "main thumbnail image". In addition, the thumbnail image TP generated based on the live view image will be referred to as a "pre-imaging thumbnail image", and the thumbnail image TP generated based on the live view image or the rec view image will be referred to as a "post-imaging thumbnail image".

In the fourth embodiment, the main image MP includes the RAW image, and is changed by executing the correction processing as in the first embodiment, and, specifically, the main image MP transitions to any one of the developed image, the color-corrected image, or the processed image via the correction processing. In the fourth embodiment, it is possible to execute the correction processing, which has the same content as the correction processing on the main image MP, on the live view image or the rec view image in conjunction with the correction processing on the main image MP.

In addition, in the fourth embodiment, the main thumbnail image, the pre-imaging thumbnail image, and the post-imaging thumbnail image may be images that are not changed in conjunction with the change in the main image MP caused by the correction processing. In this case, it is possible to ascertain whether or not the correction processing is executed on the main image MP from each of the above-described thumbnail images TP.

In the fourth embodiment, a point in time at which the pre-imaging thumbnail image is generated based on the live view image is not particularly limited. Similarly, a point in time at which the post-imaging thumbnail image is generated based on the live view image is not particularly limited. Further, the number of generated pre-imaging thumbnail images and the number of generated post-imaging thumbnail images may be optionally decided on.

Hereinafter, a case in which the plurality of thumbnail images TP are generated based on each of the main image MP, the live view image, and the rec view image will be described as a configuration example of the fourth embodiment. However, the present invention is not limited to this, and one thumbnail image may be generated based on the main image MP and the live view image or the rec view image. In this case, the thumbnail image may be obtained by arranging, for example, the image obtained by reducing the main image MP and the image obtained by reducing the live view image or the rec view image and combining the images into one image.

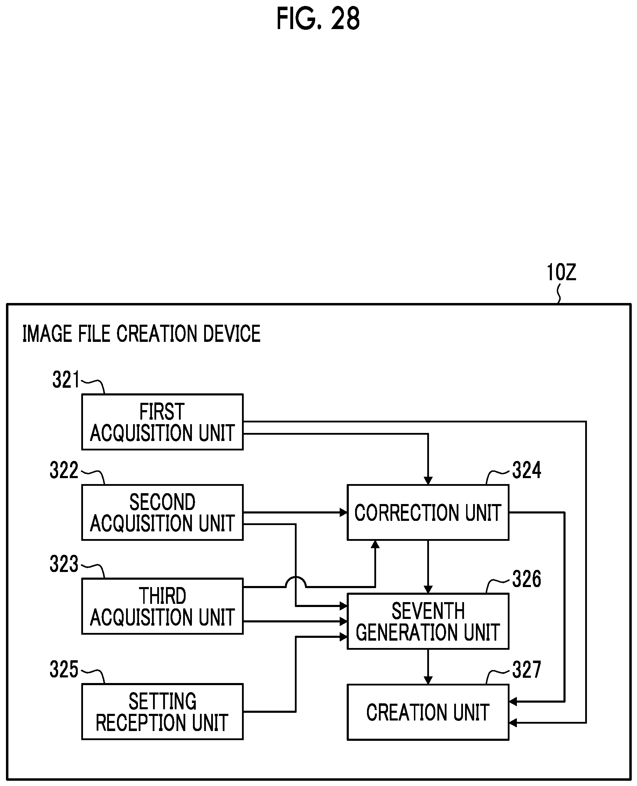

Next, functions of the image file creation device 10Z according to the fourth embodiment will be described with reference to Fig. 28. It should be noted that a hardware configuration of the image file creation device 10Z according to the fourth embodiment is the same as the hardware configuration of the first embodiment, and software such as the image file creation program is installed in the image file creation device 10Z.

As shown in Fig. 28, the image file creation device 10Z according to the fourth embodiment includes a first acquisition unit 321, a second acquisition unit 322, a third acquisition unit 323, a correction unit 324, a setting reception unit 325, a seventh generation unit 326, and a creation unit 327. These functional units are implemented by cooperation between a hardware device of the image file creation device 10Z and software including the image file creation program. In addition, some functions may be implemented by using artificial intelligence (AI). Hereinafter, each of the functional units will be described.

### (First Acquisition Unit)

The first acquisition unit 321 acquires the captured main image MP. Specifically, at a point in time at which the user fully presses the release button of the imaging device 20, the first acquisition unit 321 images the subject present within the imaging range of the imaging device 20 to acquire the RAW image, and develops the RAW image to acquire the developed image as the main image MP.

### (Second Acquisition Unit)

The second acquisition unit 322 acquires the live view image captured before the capturing of the main image MP. Specifically, the release button is half-pressed at a stage before the user fully presses the release button. Then, while the release button is half-pressed, the second acquisition unit 322 continuously captures the live view image at a predetermined time interval.

In the fourth embodiment, the live view image satisfying a predetermined condition among the captured live view images is temporarily stored in the memory 12 or the storage 16 as the image captured before the capturing of the main image MP. Here, the predetermined condition is, for example, a condition in which the state or the position of the subject in the live view image is changed by a predetermined amount or more from the image previously stored (live view image most recently stored) in the memory 12 or the storage 16.

That is, in a case in which the state or the position of the subject is changed by the predetermined amount or more from the previously stored live view image, the live view image captured at that point in time is newly stored in the memory 12 or the storage 16. In this case, the image stored in the memory 12 or the storage may be replaced with (updated to) the new live view image satisfying the above-described predetermined condition from the previously stored live view image.

In this way, in the fourth embodiment, the live view image temporarily stored in the memory 12 or the storage 16 is limited to the image satisfying the predetermined condition. Accordingly, the live view image used for the generation of the thumbnail image TP is appropriately selected, and, specifically, the live view image having a composition relatively close to the main image MP can be selected.

It should be noted that the present invention is not limited to the above-described case, and all of the images captured in the live view mode may be stored in the memory 12 or the storage 16 regardless of whether or not the predetermined condition is satisfied.

### (Third Acquisition Unit)

The third acquisition unit 323 acquires the rec view image or the live view image captured after the capturing of the main image MP. Specifically, the third acquisition unit 323 stores, for example, the rec view image or the live view image at a point in time at which a predetermined time has elapsed since the user fully presses the release button, in the memory 12 or the storage 16. Then, the post-imaging thumbnail image is generated (acquired) based on the stored image.

### (Correction Unit)

The correction unit 324 executes the correction processing on the main image MP. Specifically, as in the correction unit 23 according to the first embodiment, the correction unit 324 executes the color correction processing on the developed image as the main image MP, and executes the process correction processing on the developed image or the color-corrected image as the main image MP.

In addition, in the fourth embodiment, the correction unit 324 can execute the correction processing, which has the same content as the correction processing on the main image MP, on the pre-imaging thumbnail image or the post-imaging thumbnail image in conjunction with the execution of the correction processing on the main image MP. For example, in a case in which the color correction processing is executed on the main image MP, the correction unit 324 can execute the color correction processing having the same content on the pre-imaging thumbnail image or the post-imaging thumbnail image. In this manner, in a case in which the main image MP is corrected, by executing the same correction processing on the pre-imaging thumbnail image or the post-imaging thumbnail image, these images can be changed in accordance with the corrected main image MP.

### (Setting Reception Unit)

In a case in which the user performs a setting of increasing the resolution of each of the plurality of thumbnail images generated by the seventh generation unit 326, the setting reception unit 325 receives the setting. Specifically, in the fourth embodiment, in a case in which the thumbnail image is generated, a mode reception screen shown in Fig. 30 is displayed on the display of the imaging device 20. The user selects any one of the normal mode or a high-resolution mode through the above-described mode reception screen.

In a case in which the user selects the high-resolution mode, the setting reception unit 325 receives the selection as the setting of increasing the resolution of the thumbnail image. Here, in a case in which the high-resolution mode is selected, the resolution of each of the plurality of thumbnail images is increased as compared to in the normal mode. As a result, each of the main thumbnail image, the pre-imaging thumbnail image, and the post-imaging thumbnail image can be generated more sharply (clearly), and, as a result, the utility value of each thumbnail image TP is increased. In particular, in a case in which each of the plurality of thumbnail images is used to create the training data for machine learning, the setting of increasing the resolution of each thumbnail image as described above is more significant.

It should be noted that, in the normal mode, the resolution of each of the plurality of thumbnail images is set to the resolution of the general thumbnail image.

In addition, in a case in which the high-resolution mode is selected, the resolution of each of the plurality of thumbnail images need not be increased as compared to in the normal mode. Among the plurality of thumbnail images, at least the resolution of the main thumbnail image may be increased, and the resolution of the other thumbnail images may be increased in accordance with the instruction of the user. In consideration of the capacity of the thumbnail images, the setting reception unit 325 may receive the setting of increasing the resolution of only the main thumbnail image among the plurality of thumbnail images.

### (Seventh Generation Unit)

The seventh generation unit 326 executes processing of generating the thumbnail image based on the main image MP, the live view image, or the rec view image. In the fourth embodiment, the processing of generating the thumbnail image includes first generation processing and second generation processing. In the first generation processing, as shown in Fig. 29, the main thumbnail image, the pre-imaging thumbnail image, and the post-imaging thumbnail image are generated based on each of the main image MP, the live view image, and the rec view image. The live view image that forms the original image of the pre-imaging thumbnail image and the live view image or the rec view image that forms the original image of the post-imaging thumbnail image are temporarily stored in the memory 12 or the storage 16 of the imaging device 20, and are read out in a case in which the thumbnail image is generated.

In addition, each thumbnail image TP generated by the first generation processing is an image that is not changed in conjunction with the change in the main image MP caused by the correction processing in a case in which the correction processing is executed on the main image MP after the generation of the thumbnail image TP.

It should be noted that the seventh generation unit 326 may generate the main thumbnail image and generate any one of the pre-imaging thumbnail image or the post-imaging thumbnail image.

In addition, in a case in which the setting reception unit 325 receives the setting of increasing the resolution of the thumbnail image TP, in the first generation processing, each thumbnail image TP is generated with the resolution corresponding to the setting (that is, the resolution higher than in the normal mode). As a result, each thumbnail image TP is generated with a higher resolution, and, as a result, the image quality and the utility value of each thumbnail image TP can be improved.

It should be noted that, since the above-described setting is the setting of increasing at least the resolution of the main thumbnail image, in the first generation processing in a case in which the above-described setting is received, at least the main thumbnail image is generated with the resolution corresponding to the above-described setting.

In the second creation processing, a variable thumbnail image as the variable accessory image is generated based on the main image MP. The variable thumbnail image is an image that is changed in conjunction with the change in the main image MP caused by the correction processing in a case in which the correction processing is executed on the main image MP after the generation of the variable thumbnail image. Since the variable thumbnail image is stored in the image file along with the main thumbnail image that is not changed in conjunction with the change in the main image MP, the correction content of the main image MP can be understood by comparing these images.

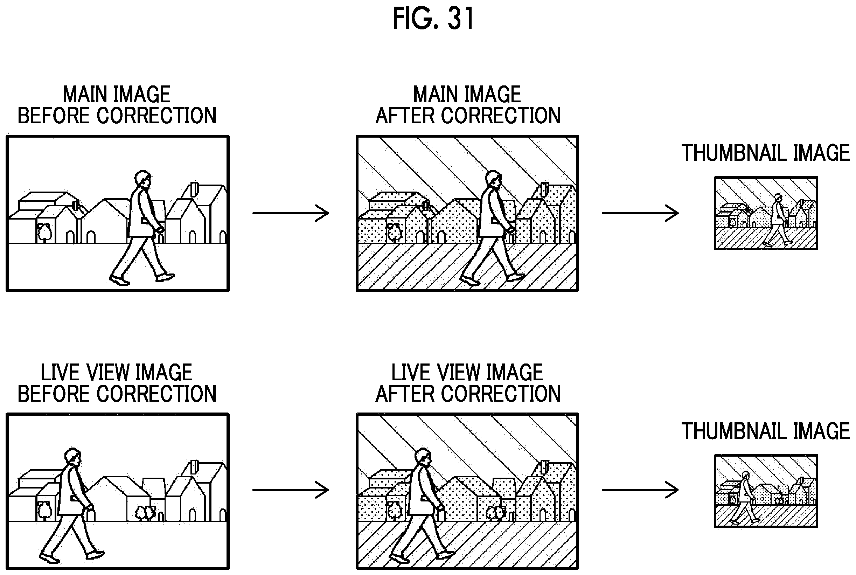

In addition, in a case in which the correction processing is executed on the main image MP, the seventh generation unit 326 may separately execute third generation processing. In the third generation processing, as shown in Fig. 31, the thumbnail image based on the main image MP on which the correction processing is executed and the thumbnail image based on the live view image or the rec view image on which the same correction processing as on the main image MP is executed are generated. In a case in which the thumbnail image based on the corrected main image MP and the thumbnail image based on the similarly corrected live view image or rec view image are generated, the security of the thumbnail image is improved. The security of the thumbnail image will be described in detail below.

It should be noted that the content of the third generation processing is not limited to the above-described content. For example, from the viewpoint of saving the data capacity, in the third generation processing, only the thumbnail image based on the main image MP on which the correction processing is executed may be generated. That is, the thumbnail image based on the live view image or the rec view image corrected in the same manner as the main image MP need not be generated.

### (Creation Unit)

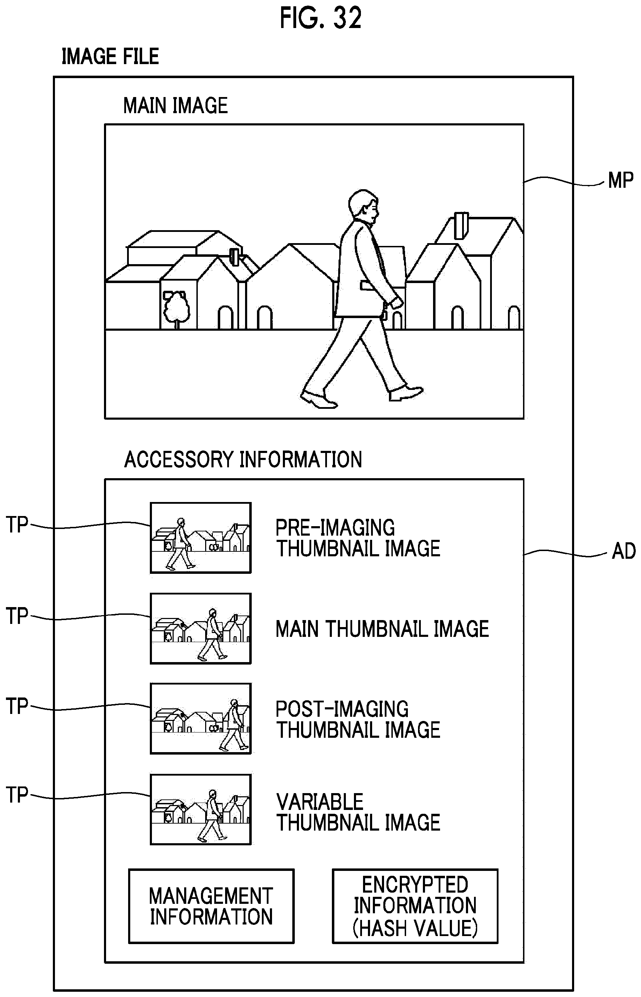

The creation unit 327 creates the image file of the main image MP acquired by the first acquisition unit 321. The accessory information related to the main image MP is stored in the image file, and the thumbnail image TP generated by the seventh generation unit 326 is included in the accessory information. In addition, the thumbnail image TP stored in the image file includes the main thumbnail image based on the main image MP, the pre-imaging thumbnail image based on the live view image, and the post-imaging thumbnail image based on the rec view image or the live view image. That is, the image file created in the fourth embodiment includes the plurality of thumbnail images TP generated based on the main image, the live view image, and the rec view image as shown in Fig. 32.

### (Operation Example of Image File Creation Device According to Fourth Embodiment)

Next, an image file creation flow using the image file creation device 10Z in the fourth embodiment will be described. In the image file creation flow described later, an image file creation method according to the fourth embodiment is used.

It should be noted that the following flow is merely an example, and some steps in the flow may be deleted, new steps may be added to the flow, or the execution order of two steps in the flow may be interchanged within a range not departing from the gist of the present embodiment.

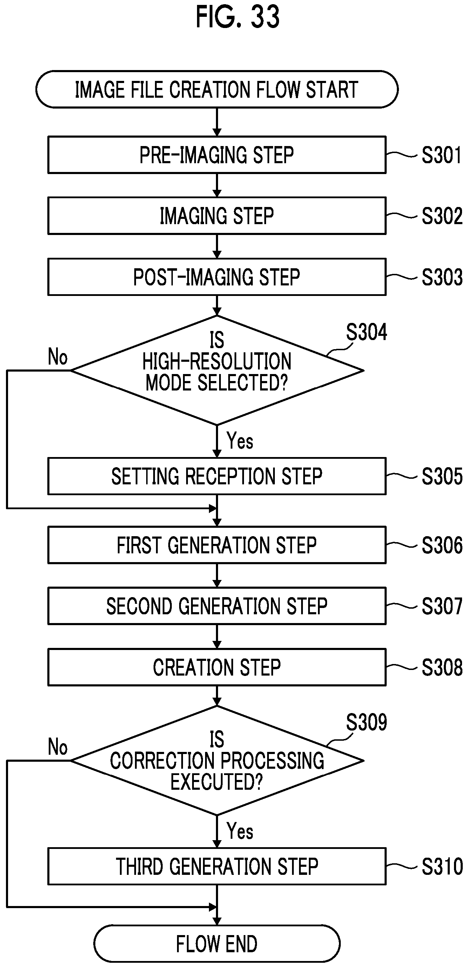

Each step in the image file creation flow according to the fourth embodiment is carried out by the processor 11 provided in the image file creation device 10Z in an order shown in Fig. 33. That is, the processor 11 executes, in each step in the image file creation flow, processing corresponding to each step among pieces of the data processing defined by the image file creation program.

In the image file creation flow according to the fourth embodiment, first, the user half-presses the release button before the capturing of the main image MP, and the processor 11 carries out a pre-imaging step with the half-pressing of the release button as a trigger (S301). In the pre-imaging step, the imaging in the live view mode is carried out, and the live view image is continuously generated (acquired). In addition, during a period in which the pre-imaging step is carried out, the live view image satisfying a predetermined condition is temporarily stored in the memory 12 or the storage 16 as an image captured before the capturing of the main image. The predetermined condition is a condition in which the state or the position of the subject in the live view image is changed by a predetermined amount or more from the previously stored image (that is, the live view image most recently stored in the memory 12 or the storage 16).

Then, in a case in which the user fully presses the release button to capture the main image MP, the processor 11 carries out the imaging step (S302). In the imaging step, the processor 11 acquires the RAW image and develops the RAW image to acquire the developed image as the main image MP.

Thereafter, the processor 11 carries out a post-imaging step at a point in time at which a predetermined time has elapsed since the main image MP is captured (S303). In the post-imaging step, the processor 11 acquires the live view image after the capturing of the main image MP. The acquired live view image is stored in the memory 12 or the storage 16. It should be noted that the processor 11 may acquire an image captured after the capturing of the main image MP, that is, may acquire the rec view image.

After the post-imaging step is carried out, a first generation step is carried out (S306). However, in a case in which the user selects the high-resolution mode as the setting of increasing the resolution of the thumbnail image, a setting reception step is carried out before the first generation step is carried out (S304 and S305). In the setting reception step, the processor 11 receives the setting of increasing the resolution of at least the main thumbnail image among the plurality of thumbnail images generated in the subsequent first generation step. More specifically, the processor 11 receives the selection of the high-resolution mode performed by the user as the setting.

It should be noted that, in the setting reception step, the setting of increasing the resolution of each of the plurality of thumbnail images may be received, or the setting of increasing only the resolution of the main thumbnail image may be received.

In the first generation step, the processor 11 generates the plurality of thumbnail images TP based on the main image MP and the live view image and the rec view image stored in the memory 12 or the storage 16. Specifically, the main thumbnail image is generated based on the main image MP, the pre-imaging thumbnail image is generated based on the live view image, and the post-imaging thumbnail image is generated based on the rec view image or the live view image. In addition, each thumbnail image TP generated in the first generation step is an image that is not changed in conjunction with the change in the main image MP caused by the correction processing.

In addition, in a case in which the setting reception step receives the selection of the high-resolution mode performed by the user as the setting of increasing the resolution of the thumbnail image TP, in the first generation step, each thumbnail image TP is generated with the resolution corresponding to the high-resolution mode. Here, among the plurality of thumbnail images TP, which thumbnail image is generated with the resolution corresponding to the high-resolution mode is decided on in accordance with the above-described setting. However, at least the main thumbnail image is generated with the resolution corresponding to the high-resolution mode.

It should be noted that the first generation processing is not limited to the processing of generating the plurality of thumbnail images TP, and may be processing of generating one thumbnail image. Specifically, the thumbnail image TP obtained by reducing each of the main image MP, the live view image, and the rec view image and aggregating the images into one image may be generated.

In the fourth embodiment, a second generation step is carried out along with the first generation step (S307). In the second generation step, the processor 11 generates the variable thumbnail image based on the main image MP. The variable thumbnail image is an image (variable accessory image) that is changed in conjunction with the change in the main image MP caused by the correction processing.

It should be noted that the second generation step need not be carried out.

After the thumbnail image TP is generated in the first generation step and the second generation step, the processor 11 carries out a creation step (S308). In the creation step, the processor creates the image file including the main image MP and the thumbnail image TP. In addition, in a case in which the variable thumbnail image is generated in the second generation step, in the creation step, the image file including the variable thumbnail image is created (see Fig. 32).

In a case in which the correction processing is executed on the main image MP in the image file after the image file is created (S309), the processor 11 replaces (updates) the main image MP in the image file with the corrected main image MP. In addition, the processor 11 carries out a third generation step in conjunction with the execution of the correction processing (S310). In the third generation step, the processor 11 generates the thumbnail image based on the main image MP on which the correction processing is executed and the thumbnail image based on the live view image or the rec view image on which the same correction processing as on the main image MP is executed.

The thumbnail image generated in the third generation step is added to the image file created in the creation step and then is stored in the image file.

It should be noted that the content of the third generation step is not limited to the above-described content, and, for example, only the thumbnail image based on the main image MP on which the correction processing is executed may be generated. That is, the thumbnail image based on the live view image or the rec view image corrected in the same manner as the main image MP need not be generated.

The image file creation flow according to the fourth embodiment ends at a point in time at which a series of steps described above are completed. As described above, in the image file creation flow according to the fourth embodiment, the thumbnail image TP is generated based on the main image MP and the live view image or the rec view image, and is stored in the image file as the accessory information of the main image MP. Therefore, the security of the thumbnail image is improved. In addition, since the image file includes the plurality of thumbnail images TP that are shifted in time, it is easy to carry out machine learning on a change in movement of the subject via a machine learning model.

Specifically, it is assumed that the thumbnail image TP itself is tampered with, and, for example, in a case in which the thumbnail image TP based on the main image MP is tampered with, the credibility of the thumbnail image TP that proves the content of the main image MP is impaired.

Meanwhile, in the fourth embodiment, as described above, the thumbnail image TP is generated based on the main image MP and the live view image or the rec view image. In this case, even in a case in which the thumbnail image TP based on the main image MP is tampered with alone, the tampering can be easily noticed by referring to the thumbnail image TP based on the live view image or the rec view image. In addition, in order to avoid the detection of the tampering, each thumbnail image TP is changed (tampered with) in the same manner, but the time and effort required for tampering with the thumbnail image TP is increased, and the difficulty of the tampering is increased. As a result, it is possible to prevent the thumbnail image TP from being tampered with and to improve the security thereof.

### <<Other Embodiments>>

The above-described embodiments are merely examples for easily describing the present invention, and other embodiments described below may be considered.

### (Timings of Creation of Thumbnail Image and Creation of Image File)

In the above-described embodiments, in a case in which the main image MP is generated (acquired) or the correction processing is executed on the main image MP, the thumbnail image TP is created in conjunction with the generation of the main image MP or the execution of the correction processing, and the image file is created. However, a timing of generating (acquiring) the thumbnail image TP and a timing of creating the image file are not particularly limited, and may be, for example, a point in time at which a predetermined time has elapsed since the point in time of the acquisition of the main image MP. In addition, the timing may be optionally decided on by the user, and the generation of the thumbnail image and the creation of the image file may be executed at a timing desired by the user.

### (Type of Imaging Device)

In the above-described embodiments, the image file creation device according to the embodiment of the present invention is mounted in the imaging device. In addition, the imaging device is the digital camera that can be carried by the user, or the information processing terminal such as a smartphone or a tablet terminal having a camera function. However, the present invention is not limited to this, and the imaging device may be a fixed imaging device, such as a security camera, an imaging device having a plurality of imaging units (image sensors), or the like.

### (Configuration of Image File Creation Device)

In the above-described embodiments, the image file including the main image MP and the accessory information is created by the imaging device that captures the main image MP. However, the present invention is not limited to this, and the image file may be created by a device different from the imaging device, specifically, an information processing terminal such as a PC, a smartphone, or a tablet terminal connected to the imaging device. In this case, the main image MP is captured by the imaging device, and then the main image MP is transmitted from the imaging device to the information processing terminal. Then, the information processing terminal that receives the main image MP executes image processing such as the correction processing or the combining processing on the main image MP, and generates the accessory information including the thumbnail image TP.

### (Configuration of Processor)

The processor provided in the image file creation device according to the embodiment of the present invention includes various processors. Examples of the various processors include a CPU, which is a general-purpose processor that executes software (programs) to function as various processing units.

Moreover, the various processors include a programmable logic device (PLD), which is a processor of which a circuit configuration can be changed after manufacture, such as a field-programmable gate array (FPGA).

Further, the various processors described above also include a dedicated electric circuit, which is a processor having a circuit configuration specially designed for executing specific processing, such as an application-specific integrated circuit (ASIC).

In addition, one functional unit of the image file creation device according to the embodiment of the present invention may be configured by one of the various processors. Alternatively, one functional unit of the image file creation device according to the embodiment of the present invention may be configured by a combination of two or more processors of the same type or different types, for example, a combination of a plurality of FPGAs, a combination of an FPGA and a CPU, or the like.

Moreover, a plurality of functional units provided in the image file creation device according to the embodiment of the present invention may be configured by one of the various processors, or may be configured by one processor in which two or more of the plurality of functional units are combined.

Further, as in the above-described embodiments, a form may be adopted in which one processor is configured by a combination of one or more CPUs and software, and the processor functions as the plurality of functional units.

In addition, for example, as typified by a system-on-chip (SoC) or the like, a form may be adopted in which a processor is used which implements the functions of the entire system including the plurality of functional units in the image file creation device according to the embodiment of the present invention with one integrated circuit (IC) chip. Further, a hardware configuration of the various processors may be an electric circuit (circuitry) in which circuit elements, such as semiconductor elements, are combined. Explanation of References

10: image file creation device
10X, 10Y, 10Z: image file creation device
11: processor
12: memory
13: communication interface
14: input device
15: output device
16: storage
20: imaging device
21: type reception unit
22: first generation unit
23: correction unit
24: decision unit
25: selection acquisition unit
26: second generation unit
27: creation unit
121: third generation unit
122: reception unit
123: image decision unit
124: combining unit
125: fourth generation unit
126: creation unit
221: fifth generation unit
222: selection unit
223: analysis unit
224: factor-and-other-elements decision unit
225: mode reception unit
226: sixth generation unit
227: encryption unit
228: creation unit
321: first acquisition unit
322: second acquisition unit
323: third acquisition unit
324: correction unit
325: setting reception unit
326: seventh generation unit
327: creation unit
AD: accessory information
MP: main image
TP: thumbnail image (accessory image)

## Claims

1. An image file creation method of creating an image file including a main image and an accessory image as accessory information related to the main image, the image file creation method comprising:
a type reception step of receiving a type of the accessory image in association with correction processing on the main image; and
an acquisition step of acquiring the accessory image that is not changed in conjunction with a change in the main image caused by the correction processing, based on the type.

2. The image file creation method according to claim 1,
wherein the acquisition step is carried out in a case in which the correction processing is executed on the main image.

3. The image file creation method according to claim 1,
wherein the correction processing is executed in an imaging device that captures the main image.

4. The image file creation method according to claim 1,
wherein, in the type reception step, at least one of a first accessory image, a second accessory image, or a third accessory image is received as the type,
the first accessory image is generated based on a first image obtained by executing development correction processing for development on a RAW image as the main image,
the second accessory image is generated based on a second image obtained by executing color correction processing including color correction on the main image, and
the third accessory image is generated based on a third image obtained by executing process correction processing for processing a subject in the main image on the main image.

5. The image file creation method according to claim 4,
wherein the development correction processing does not include a portion of a plurality of pieces of the color correction that are executable in the color correction processing.

6. The image file creation method according to claim 4,
wherein, in a case in which two or more types of the accessory images among the first accessory image, the second accessory image, and the third accessory image are acquired, the image file includes the two or more types of the accessory images as the accessory images.

7. The image file creation method according to claim 4,
wherein, in a case in which the third image is acquired by executing the process correction processing on the first image or the second image as the main image included in the image file, the main image included in the image file is replaced with the third image from the first image or the second image.

8. The image file creation method according to claim 4, further comprising:
a selection acquisition step of acquiring selection of a user regarding whether or not to acquire the third accessory image in a case in which the process correction processing is executed on the main image,
wherein the acquisition step of acquiring the third accessory image is carried out in accordance with the selection in a case in which the process correction processing is executed on the main image.

9. The image file creation method according to claim 4, further comprising:
a decision step of deciding whether or not to carry out the acquisition step of acquiring the third accessory image based on a correction content of the main image in a case in which the process correction processing is executed on the main image.

10. The image file creation method according to claim 1,
wherein the accessory information includes information related to the type of the accessory image.

11. The image file creation method according to claim 1,
wherein the accessory information includes information obtained by encrypting the accessory image.

12. The image file creation method according to claim 11,
wherein the information obtained by encrypting the accessory image includes a hash value obtained by hashing the accessory image.

13. The image file creation method according to claim 1,
wherein the accessory image includes a first thumbnail image that is not changed in conjunction with the change in the main image caused by the correction processing and that is generated by reducing an entirety or a part of the main image at a point in time of generation of the accessory image.

14. The image file creation method according to claim 13,
wherein the accessory image includes a second thumbnail image that is changed in conjunction with the change in the main image caused by the correction processing and that is generated by reducing the entirety or a part of the main image.

15. An image file creation device that creates an image file including a main image and an accessory image as accessory information related to the main image, the image file creation device comprising:
a processor,
wherein the processor receives a type of the accessory image in association with correction processing on the main image, and
the processor acquires the accessory image that is not changed in conjunction with a change in the main image caused by the correction processing, based on the type.
